# EUROPEAN PATENT SPECIFICATION

(11) **EP 4 422 230 B1**
(45) Date of publication and mention of the grant of the patent: **27.05.2026**
(21) Application number: 22918492.4
(22) Date of filing: 29.12.2022
(51) Int. Cl.: H04W 4/80, H04L 67/06

(54) **CONTENT SHARING METHOD AND ELECTRONIC DEVICE**
VERFAHREN ZUR GEMEINSAMEN NUTZUNG VON INHALTEN UND ELEKTRONISCHE VORRICHTUNG
PROCÉDÉ DE PARTAGE DE CONTENU ET DISPOSITIF ÉLECTRONIQUE

(30) Priority: 07.01.2022 CN 202210016575
(43) Date of publication of application: 28.08.2024
(73) Proprietor: Huawei Technologies Co., Ltd., Shenzhen, Guangdong 518129 (CN)
(72) Inventor: LIU, Cheng, Shenzhen, Guangdong 518129 (CN); ZHOU, Xingchen, Shenzhen, Guangdong 518129 (CN)
(74) Representative: Isarpatent
(86) International application number: PCT/CN2022/143552
(87) International publication number: WO 2023/131051

(56) References cited:
- CN-A- 102 664 926
- CN-A- 108 605 049
- CN-A- 110 109 639
- CN-A- 112 203 130
- CN-A- 112 203 130
- CN-A- 112 486 363
- CN-A- 113 452 945
- CN-B- 107 040 569

## Description

### TECHNICAL FIELD

This application relates to the field of electronic device technologies, and in particular, to a content sharing method, an electronic device, and a computer-readable storage medium.

### BACKGROUND

A cockpit refers to interior space of a vehicle, for example, an automobile, an airplane, or a ship. An intelligent cockpit refers to a cockpit equipped with intelligent and networked onboard products, thus with intelligent interaction functions. At present, an intelligent cockpit has become an indispensable part of an intelligent automobile and is a highly intelligent embodiment.

Most intelligent cockpits are equipped with a plurality of displays. Currently, when a user shares a service on a mobile device (for example, a mobile phone) to a plurality of displays of the intelligent cockpit, a Bluetooth sharing manner or a software sharing manner may be used.

When the Bluetooth sharing manner is used, the mobile device can share only an audio service to the intelligent cockpit. Therefore, service content that can be shared by the mobile device is limited, and it is difficult to meet sharing requirements for a plurality of types of services. In the software sharing-based manner, the displays in the intelligent cockpit need to be adapted to the mobile device, a service provider in the mobile device also needs to be adapted, and the mobile device further needs to be installed with dedicated software to control and implement service sharing between the mobile device and the intelligent cockpit. Although the plurality of types of services can be shared, a sharing process is complex, efficiency is low, and user experience is poor. In addition, the software needs to run in the foreground during sharing. This affects execution of other functions of the mobile device. Document CN 112 203 130 A (GUANGZHOU AUTOMOBILE GROUP CO) 8 January 2021 (2021-01-08) relates to an in-vehicle infotainment terminal and a multi-screen interactive display method and represents background art.

### SUMMARY

This application provides a content sharing methodology, as described in method claims 1 and 5 and in claims 8 and 9 directed respectively to an electronic device and a computer-readable storage medium..

This improves sharing efficiency and use experience.

According to a first aspect, an embodiment of this application provides a content sharing method, applied to a first electronic device, where the first electronic device includes a first application, and the method includes: The first electronic device obtains first shared information in response to a received first operation, where the first operation indicates to share target content in the first application with at least one display of a second electronic device, and the first shared information indicates the first application and the target content; and the first electronic device sends the first shared information and target display information to the second electronic device, where the target display information indicates the at least one display.

In the method, when sharing the target content in the first application with the second electronic device, the first electronic device may send, to the second electronic device, the shared information indicating the first application and the target content, so that the second electronic device can obtain the target content in the first application based on the shared information and display the target content. Based on this, the first electronic device can quickly share the target content of the first application to the second electronic device without any modification on the first application, and without additional control software. Therefore, the method can implement easy and fast content sharing between different electronic devices. This improves sharing efficiency and use experience.

In a possible design, that the first electronic device obtains first shared information includes: The first electronic device obtains second shared information, where the second shared information indicates a sharing link that is of the target content and that is generated by the first application; and the first electronic device determines the first shared information based on the second shared information.

The sharing link generated by the current application generally indicates only brief information of the to-be-shared content, and may be used to indirectly start the application in another application and display the content in the application, but cannot directly invoke the application to display the content, and cannot completely restore and display the shared content. In the method, after obtaining the sharing link generated by the first application, the first electronic device may parse the sharing link to obtain a real sharing address and a sharing parameter of the target content, so as to obtain the first shared information, so that the first application can be directly invoked to display the target content based on the first shared information. Therefore, the second electronic device that accepts sharing may directly invoke, based on the first shared information, the first application to display the target content, so that the content shared by the first electronic device can be completely restored and displayed, to implement seamless transfer of shared content from the first electronic device to the second electronic device. This improves content sharing efficiency and use experience.

In a possible design, that the first electronic device determines the first shared information based on the second shared information includes: The first electronic device performs character string matching on the second shared information, to obtain content indication information and first address information of the target content, where the content indication information indicates the target content, and the first address information is used to determine an address for obtaining the target content; and the first electronic device determines the first shared information based on the content indication information and the first address information.

In the method, the address of the target content may be determined based on the first address information, and detailed content of the target content may be determined based on the content indication information. Therefore, the target content may be obtained based on the first address information and the content indication information. In this case, after the first electronic device determines the first shared information based on the address information and the content indication information, and sends the first shared information to the second electronic device, it can be ensured that the second electronic device can obtain the target content based on the first shared information, so as to display the target content. This implements sharing of the target content.

In a possible design, the first address information is a uniform resource locator; and that the first electronic device determines the first shared information based on the content indication information and the first address information includes: The first electronic device uses the content indication information and the first address information as the first shared information; or the first electronic device redirects the first address information to obtain second address information, where the second address information indicates the address for obtaining the target content; and the first electronic device uses the content indication information and the second address information as the first shared information.

In the method, redirection processing is performed on the first address information, to obtain a real source address, that is, the second address information, from which the target content can be obtained. Based on this, the second electronic device can obtain the target content directly, easily, and quickly based on the second address information. In this way, target content can be obtained and displayed more quickly, to accelerate a content sharing speed and efficiency.

In a possible design, before that the first electronic device obtains first shared information in response to a received first operation, the method further includes: The first electronic device receives the first operation after receiving first indication information from the second electronic device, where the first indication information indicates a plurality of displays of the second electronic device.

In the method, the first electronic device may determine the plurality of displays of the second electronic device, and may further select, from the plurality of displays of the second electronic device, a display on which the target content needs to be shared, so as to perform targeted sharing of the target content. This improves flexibility of content sharing.

In a possible design, the first operation includes a second operation and a third operation, the second operation indicates to share the target content, and the third operation is used to select the at least one display from the plurality of displays; and that the first electronic device receives the first operation includes: The first electronic device receives the second operation; the first electronic device displays second indication information in response to the second operation, where the second indication information indicates the plurality of displays; and the first electronic device receives the third operation.

In the method, when determining to share the target content, the first electronic device displays indication information indicating the plurality of displays of the second electronic device, so that the user can select, from the plurality of displays of the second electronic device, the display on which the target content needs to be shared, and further share the target content with the specific display of the second electronic device. This improves flexibility and experience of content sharing.

In a possible design, the first indication information further indicates statuses of the plurality of displays, and the status includes an unlocked state or a locked state; and before that the first electronic device displays second indication information in response to the second operation, the method further includes: The first electronic device determines, based on the first indication information, that all of the plurality of displays are in the unlocked state.

In the method, when the display of the second electronic device is in the unlocked state, the user may directly use the display. Therefore, when sharing the target content with the second electronic device, the first electronic device may indicate, by determining that the display of the second electronic device is in the unlocked state, the display that can be used and that is of the second electronic device to the user, so that the available display is selected from the displays to share the content. This improves use experience.

In a possible design, before that the first electronic device obtains first shared information in response to a received first operation, the method further includes: The first electronic device displays the target content by invoking the first application; and after that the first electronic device sends the first shared information and target display information to the second electronic device, the method further includes: The first electronic device updates the target content in response to a received fourth operation.

In the method, after the first electronic device indicates the first shared information to the second electronic device, the second electronic device can obtain and display the target content of the first application based on the first shared information. The second electronic device does not affect subsequent processing of the first electronic device side, and is not affected by the subsequent processing of the first electronic device side. Therefore, after sending the first shared information to the second electronic device, the first electronic device may continue to perform a subsequent process of the first electronic device. This improves processing efficiency of the first electronic device and use experience.

According to a second aspect, an embodiment of this application provides a content sharing method, applied to a second electronic device, where the second electronic device includes a first application, and the method includes: The second electronic device receives first shared information and target display information from a first electronic device, where the first shared information indicates the first application and target content in the first application, and the target display information indicates at least one display of the second electronic device; the second electronic device determines the first application and obtains the target content based on the first shared information, and determines the at least one display based on the target display information; and the second electronic device separately displays the target content on the at least one display by invoking the first application.

In the method, after receiving the shared information that is from the first electronic device and that indicates the first application and the target content, the second electronic device may obtain the target content in the first application based on the shared information and display the target content. This can achieve an effect that the first electronic device shares the target content with the second electronic device. In addition, the second electronic device can implement receiving and displaying of the shared content without any modification on the first application, and without additional control software. Therefore, the method can implement easy and fast content sharing between different electronic devices. This improves sharing efficiency and use experience.

In a possible design, the first shared information includes content indication information and first address information, or the first shared information includes content indication information and second address information, where the content indication information indicates the target content, the first address information is used to determine an address for obtaining the target content, and the second address information indicates the address for obtaining the target content.

In the method, the address of the target content may be determined based on the address information, and detailed content of the target content may be determined based on the content indication information. Therefore, the target content may be obtained based on the address information and the content indication information. In this case, the second electronic device can obtain the target content based on the first shared information, so as to display the target content. This implements sharing of the target content.

In a possible design, before that the second electronic device receives first shared information and target display information from a first electronic device, the method further includes: The second electronic device sends first indication information to the first electronic device, where the first indication information indicates a plurality of displays of the second electronic device, and the at least one display is included in the plurality of displays.

In the method, the second electronic device indicates the information of the plurality of displays of the second electronic device to the first electronic device, so that the first electronic device can select, from the plurality of displays of the second electronic device, a display on which the target content needs to be shared, so as to perform targeted sharing of the target content. This improves flexibility of content sharing.

In a possible design, the first indication information further indicates statuses of the plurality of displays, and the status includes an unlocked state or a locked state; and all of the plurality of displays are in the unlocked state.

In the method, when the display of the second electronic device is in the unlocked state, the user may directly use the display. Therefore, the second electronic device indicates the plurality of displays in the unlocked state to the first electronic device, so that the first electronic device can indicate a display that can be used and that is of the second electronic device to the user, so that the available display is selected from the displays to share content. This improves use experience.

In a possible design, after that the second electronic device separately displays the target content on the at least one display by invoking the first application, the method further includes: The second electronic device updates, in response to a received fifth operation, the target content displayed on a target display, where the target display is any display in the at least one display.

In the method, after the first electronic device indicates the first shared information to the second electronic device, the second electronic device can obtain and display the target content of the first application based on the first shared information. The second electronic device does not affect subsequent processing of the first electronic device side, and is not affected by the subsequent processing of the first electronic device side. Therefore, after displaying the target content of the first application based on the first shared information, the second electronic device may independently continue to perform a subsequent processing process. This improves processing efficiency of the second electronic device and use experience.

According to a third aspect, an embodiment of this application provides a content sharing method, applied to a system including a first electronic device and a second electronic device, where the first electronic device and the second electronic device include a first application, and the method includes: The first electronic device obtains first shared information in response to a received first operation, where the first operation indicates to share target content in the first application with at least one display of the second electronic device, and the first shared information indicates the first application and the target content; the first electronic device sends the first shared information and target display information to the second electronic device, where the target display information indicates the at least one display; the second electronic device receives the first shared information and the target display information; the second electronic device determines the first application and obtains the target content based on the first shared information, and determines the at least one display based on the target display information; and the second electronic device separately displays the target content on the at least one display by invoking the first application.

In a possible design, that the first electronic device obtains first shared information includes: The first electronic device obtains second shared information, where the second shared information indicates a sharing link that is of the target content and that is generated by the first application; and the first electronic device determines the first shared information based on the second shared information.

In a possible design, that the first electronic device determines the first shared information based on the second shared information includes: The first electronic device performs character string matching on the second shared information, to obtain content indication information and first address information of the target content, where the content indication information indicates the target content, and the first address information is used to determine an address for obtaining the target content; and the first electronic device determines the first shared information based on the content indication information and the first address information.

In a possible design, the first address information is a uniform resource locator; and that the first electronic device determines the first shared information based on the content indication information and the first address information includes: The first electronic device uses the content indication information and the first address information as the first shared information; or the first electronic device redirects the first address information to obtain second address information, where the second address information indicates the address for obtaining the target content; and the first electronic device uses the content indication information and the second address information as the first shared information.

In a possible design, before that the first electronic device obtains first shared information in response to a received first operation, the method further includes: The second electronic device sends first indication information to the first electronic device, where the first indication information indicates a plurality of displays of the second electronic device; and the first electronic device receives the first operation after receiving the first indication information.

In a possible design, the first operation includes a second operation and a third operation, the second operation indicates to share the target content, and the third operation is used to select the at least one display from the plurality of displays; and that the first electronic device receives the first operation includes: The first electronic device receives the second operation; the first electronic device displays second indication information in response to the second operation, where the second indication information indicates the plurality of displays; and the first electronic device receives the third operation.

In a possible design, the first indication information further indicates statuses of the plurality of displays, and the status includes an unlocked state or a locked state; and before that the first electronic device displays second indication information in response to the second operation, the method further includes: The first electronic device determines, based on the first indication information, that all of the plurality of displays are in the unlocked state.

In a possible design, before that the first electronic device obtains first shared information in response to a received first operation, the method further includes: The first electronic device displays the target content by invoking the first application; and after that the first electronic device sends the first shared information and target display information to the second electronic device, the method further includes: The first electronic device updates the target content in response to a received fourth operation.

In a possible design, after that the second electronic device separately displays the target content on the at least one display by invoking the first application, the method further includes: The second electronic device updates, in response to a received fifth operation, the target content displayed on a target display, where the target display is any display in the at least one display.

According to a fourth aspect, an embodiment of this application provides an electronic device, where the electronic device includes a first application, and the electronic device includes: a processing unit, configured to obtain first shared information in response to a received first operation, where the first operation indicates to share target content in the first application with at least one display of the second electronic device, and the first shared information indicates the first application and the target content; and a transceiver unit, configured to send the first shared information and target display information to the second electronic device, where the target display information indicates the at least one display.

In a possible design, that the processing unit obtains the first shared information includes: obtaining second shared information, where the second shared information indicates a sharing link that is of the target content and that is generated by the first application; and determining the first shared information based on the second shared information.

In a possible design, that the processing unit determines the first shared information based on the second shared information includes: performing character string matching on the second shared information to obtain content indication information and first address information that are of the target content, where the content indication information indicates the target content, and the first address information is used to determine an address for obtaining the target content; and determining the first shared information based on the content indication information and the first address information.

In a possible design, the first address information is a uniform resource locator; and that the processing unit determines the first shared information based on the content indication information and the first address information includes: using the content indication information and the first address information as the first shared information; or performing redirection on the first address information to obtain second address information, where the second address information indicates the address for obtaining the target content; and using the content indication information and the second address information as the first shared information.

In a possible design, before that the processing unit obtains the first shared information in response to the received first operation, the method further includes: The transceiver unit receives the first operation after receiving first indication information from the second electronic device, where the first indication information indicates a plurality of displays of the second electronic device.

In a possible design, the first operation includes a second operation and a third operation, where the second operation indicates to share the target content, and the third operation is used to select the at least one display from the plurality of displays. That the transceiver unit receives the first operation includes: receiving the second operation; displaying second indication information by using the processing unit in response to the second operation, where the second indication information indicates the plurality of displays; and receiving the third operation.

In a possible design, the first indication information further indicates statuses of the plurality of displays, and the status includes an unlocked state or a locked state; and before that the transceiver unit displays the second indication information by using the processing unit in response to the second operation, the method further includes: The processing unit determines, based on the first indication information, that all of the plurality of displays are in the unlocked state.

In a possible design, before that the processing unit obtains the first shared information in response to the received first operation, the method further includes: The processing unit displays the target content by invoking the first application; and after that the transceiver unit sends the first shared information and the target display information to the second electronic device, the method further includes: The processing unit updates the target content in response to a received fourth operation.

According to a fifth aspect, an embodiment of this application provides an electronic device, where the electronic device includes a first application, and the electronic device includes: a transceiver unit, configured to receive first shared information and target display information from a first electronic device, where the first shared information indicates the first application and target content in the first application, and the target display information indicates at least one display of a second electronic device; and a processing unit, configured to: determine the first application and obtain the target content based on the first shared information, and determine the at least one display based on the target display information; and separately display the target content on the at least one display by invoking the first application.

In a possible design, the first shared information includes content indication information and first address information, or the first shared information includes content indication information and second address information, where the content indication information indicates the target content, the first address information is used to determine an address for obtaining the target content, and the second address information indicates the address for obtaining the target content.

In a possible design, before that the second electronic device receives first shared information and target display information from a first electronic device, the method further includes: The second electronic device sends first indication information to the first electronic device, where the first indication information indicates a plurality of displays of the second electronic device, and the at least one display is included in the plurality of displays.

In a possible design, the first indication information further indicates statuses of the plurality of displays, and the status includes an unlocked state or a locked state; and all of the plurality of displays are in the unlocked state.

In a possible design, after that the second electronic device separately displays the target content on the at least one display by invoking the first application, the method further includes: The second electronic device updates, in response to a received fifth operation, the target content displayed on a target display, where the target display is any display in the at least one display.

According to a sixth aspect, an embodiment of this application provides an electronic device, where the electronic device includes a display, a memory, and one or more processors, where the memory is configured to store computer program code, and the computer program code includes computer instructions; and when the computer instructions are executed by the one or more processors, the electronic device is enabled to perform the method described in the first aspect or any possible design of the first aspect, or perform the method described in the second aspect or any possible design of the second aspect.

According to a seventh aspect, this application provides a computer-readable storage medium, where the computer-readable storage medium stores a computer program, and when the computer program is run on a computer, the computer is enabled to perform the method described in the first aspect or any possible design of the first aspect; or perform the method described in the second aspect or any possible design of the second aspect.

According to an eighth aspect, this application provides a computer program product, where the computer program product includes a computer program or instructions, and when the computer program or the instructions is/are run on a computer, the computer is enabled to perform the method described in the first aspect or any possible design of the first aspect; and or perform the method described in the second aspect or any possible design of the second aspect.

For beneficial effects of the third aspect to the eighth aspect, refer to the description of the beneficial effects of the first aspect or the second aspect. Details are not described herein again.

### BRIEF DESCRIPTION OF DRAWINGS

FIG. 1 is a schematic diagram of a hardware architecture of an electronic device according to an embodiment of this application;
FIG. 2 is a schematic diagram of a software architecture of an electronic device according to an embodiment of this application;
FIG. 3 is a schematic diagram of an architecture of a multi-screen sharing service of a first electronic device according to an embodiment of this application;
FIG. 4 is a schematic diagram of an architecture of a multi-screen sharing service of a second electronic device according to an embodiment of this application;
FIG. 5(a) and FIG. 5(b) are schematic diagrams of a sharing method according to an embodiment of this application;
FIG. 6 is a schematic diagram of link sharing according to an embodiment of this application;
FIG. 7 is a schematic flowchart of a method for obtaining detailed configuration information of an application service through parsing according to an embodiment of this application;
FIG. 8 is a schematic diagram of displays in a vehicle cockpit according to an embodiment of this application;
FIG. 9a is a schematic diagram of a control interface for sharing a service to a vehicle cockpit according to an embodiment of this application;
FIG. 9b(a) and FIG. 9b(b) are schematic diagrams of another control interface for sharing a service to a vehicle cockpit according to an embodiment of this application;
FIG. 10a is a schematic diagram of a prompt interface for sharing a service according to an embodiment of this application;
FIG. 10b is a schematic diagram of another effect interface for sharing a service according to an embodiment of this application;
FIG. 11A, FIG. 11B, and FIG. 11C are a schematic diagram of a possible execution process of a content sharing method according to an embodiment of this application;
FIG. 12A, FIG. 12B, and FIG. 12C are schematic diagrams of a control interface for sharing a service to a vehicle cockpit according to an embodiment of this application;
FIG. 13 is a schematic diagram of a prompt interface for sharing a service according to an embodiment of this application;
FIG. 14 is a schematic diagram of another effect interface for sharing a service according to an embodiment of this application;
FIG. 15 is a schematic diagram of a content sharing method according to an embodiment of this application;
FIG. 16 is a schematic diagram of a content sharing method according to an embodiment of this application;
FIG. 17 is a schematic diagram of an electronic device according to an embodiment of this application; and
FIG. 18 is a schematic diagram of a structure of an electronic device according to an embodiment of this application.

### DESCRIPTION OF EMBODIMENTS

To make objectives, technical solution, and advantages of embodiments of this application clearer, the following further describes embodiments of this application in detail with reference to the accompanying drawings. The terms "first" and "second" below in the description of the embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, examples of descriptions of concepts related to this application are provided for reference.
(1) The electronic device may be a device with a wireless connection function. In some embodiments of this application, the electronic device may be a device that has one or more displays.

In some embodiments of this application, the electronic device may be a portable device, for example, a mobile phone, a tablet computer, a wearable device with a wireless communication function (for example, a watch, a bracelet, a helmet, or a headphone), a vehicle-mounted terminal device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). Alternatively, the electronic device may be a smart home device (for example, a smart TV or a smart speaker), an intelligent automobile, an intelligent robot, a workshop device, a wireless terminal in self driving (Self Driving), a wireless terminal in remote medical surgery (Remote Medical Surgery), a wireless terminal in a smart grid (Smart Grid), a wireless terminal in transportation safety (Transportation Safety), a wireless terminal in smart city (Smart City), a wireless terminal in smart home (Smart Home), or a flight device (for example, an intelligent robot, a hot air balloon, an uncrewed aerial vehicle, or an aircraft).

In some embodiments of this application, the electronic device may alternatively be a portable terminal device that further includes another function, for example, a personal digital assistant and/or a music playing function. An example embodiment of the portable terminal device includes but is not limited to a portable terminal device using iOS^{®}, Android^{®}, Microsoft^{®}, or another operating system. Alternatively, the portable terminal device may be another portable terminal device, for example, a laptop computer (Laptop) with a touch-sensitive surface (for example, a touch panel). It should be further understood that, in some other embodiments of this application, the electronic device may not be a portable terminal device, but is a desktop computer having a touch-sensitive surface (for example, a touch panel).

(2) A point of interest (point of interest, POI) originally refers to point-type data in an internet electronic map, and basically includes four attributes: name, address, coordinate, and category. Currently, the POI also refers to information of an object that can be abstracted into a point for management, analysis, and calculation. As an information data structure, the POI can encapsulate various information about the object and provide the information to a user, so that the user can quickly search for and use the object based on the POI.

(3) A schema (schema) is an intra-page redirection protocol, and pages in an application (application, APP) may be very conveniently redirected by using the schema. Alternatively, the scheme protocol may indicate the application to jump to a specified page in a customized manner, or a redirection page may be customized by using a notification bar message.

(4) Character string matching, also referred to as a character string locating operation, refers to: determine, by matching a to-be-detected character string with a character string of a given pattern (also referred to as a pattern string), whether a substring (a sub character string) of the given pattern exists in the to-be-detected character string; and locate the substring when it is determined that the substring of the given pattern exists in the to-be-detected character string. Different substrings in the to-be-detected character string may be identified by performing character string matching, and a meaning of the to-be-detected character string may be finally determined.

(5) Uniform resource locator (uniform resource locator, URL) is a presentation method on an internet's web service program for specifying an information location. The URL locates a resource by providing an abstract identifier of a resource location. Generally, the URL includes a string of characters, such as a letter, a digit, and a special character. After locating a resource, a system may perform various operations on the resource. These operations can be abstracted as accessing, updating, replacing, and discovering attributes. During these operations, the system needs to locate the resource based on the URL.

(6) Redirection (redirect), also called URL forwarding, is a technique of keeping an original link available when an actual resource (for example, a single page, a form, or an entire web application) is migrated to a new URL. A hypertext transfer protocol (hyper text transfer protocol, HTTP) provides a special form of response (that is, HTTP redirection), to perform such an operation.

(7) Serialization (serialization) refers to a process of converting information, for example, a state and content of an object into a form that can be stored, transmitted, or accessed. Different devices, applications, programs, and services can share the object by serializing the object. Information about the object can be written into a temporary or permanent storage area during serialization, and the object can be recreated after serialization by reading or deserializing the information about the object from the storage area.

(8) Fetch (fetch), an HTTP data request manner, is used to obtain a network process or a network resource, and may obtain specific data at a URL address of a server by using the address.

During a fetch process, an HTTP request can be sent to request data from the server. The server creates a request object and a response object for the HTTP request. The request object is used to obtain the HTTP request, and the response object is used to provide the data based on the HTTP request.

The HTTP request generally includes a request header and a request body. The request header (request header) is a type of HTTP header, is a message header part of the HTTP request, may be used to describe an HTTP response, and is irrelevant to the request body. The request body is used to request the data.

Generally, the HTTP response contains a response header and a response body. The response header (response header) is a message header part of the HTTP response, and may be used to describe the HTTP response. The response body (response body) is the data provided by the server.

(9) An intent (intent) is a process service used to resolve communication between components in an application. The intent describes an action of an operation in an application, data involved in the action, additional data, and the like, so that the system finds a corresponding component based on the description, and transfers the intent to the component, so that the component completes the action of the operation in the application. This implements component invoking. By providing information about component invocation, the intent can decouple a caller from a callee.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, at least one of a, b, or c may represent: a, b, c, a and b, a and c, b and c, or a, b and c, where a, b, and c may be a singular or plural number.

Currently, when a user shares a service in a mobile device to a plurality of displays in an intelligent cockpit in a head unit, a Bluetooth sharing manner or a software sharing manner may be used.

The Bluetooth sharing manner is the most widely used solution for sharing mobile services with head units in smart head units. However, this manner is limited to sharing audio streaming services such as music and book listening. A specific sharing process is as follows: a decoder of a mobile end encodes an audio stream of a current audio channel, and transmits the encoded audio stream to the head unit in a Bluetooth manner. After receiving the audio stream from the mobile end, the head unit decodes and plays the audio stream. Based on this manner, the mobile end may share the audio service with the head unit. However, this solution is applicable only to an audio service sharing scenario, and is not applicable to a sharing scenario of another type of service (for example, a video service). Therefore, application scenarios of this solution are limited. In addition, the Bluetooth transmission manner has a small transmission bandwidth and a low rate. Even when the Bluetooth transmission manner is applied to the audio scenario, there are some cases in which transmission is limited. For example, the Bluetooth transmission manner has low support for transmission of lossless music in a high-fidelity (high-fidelity, Hi-Fi) format. In addition, based on the Bluetooth sharing manner, the mobile end can only establish a Bluetooth connection to a central control device at the head unit and share a service with the head unit, but cannot separately establish an association with a plurality of displays in a cockpit at the head unit and share a service to the displays. Consequently, flexibility and convenience of sharing services between the mobile end and the head units are poor.

The software sharing manner depends on adaptation of the head unit and the mobile end. A sharing process mainly includes the following four steps.
(1) The mobile end provides a service-oriented platform for third-party vendors that provide application services to access the platform.
(2) A virtual screen is generated on the mobile end, and a service interface that needs to be displayed on the head unit is added to the virtual screen for running.
(3) The mobile end encodes a video stream on the virtual screen and sends the encoded video stream to the head unit. After decoding the video stream, the head unit displays a corresponding service interface on a display.
(4) When a user taps content of an operation service interface on the display of the head unit, the head unit sends a tap event back to the mobile end, and the mobile end performs corresponding processing and then controls the head unit to display.

In this solution, the mobile end needs to adapt to the head unit, adapt to an application service provider, and needs to install corresponding software for control. Therefore, a sharing process is complex. In a sharing process, the mobile end and the head unit transmit service content based on video streams, and stability is low, software and application services of the mobile end are still running on the mobile device. This occupies bandwidths of the mobile device and increases power consumption of the mobile device. In addition, when the mobile end transmits the shared content to the head unit, software of the mobile device needs to be run in the foreground. This also affects use of the mobile end.

To sum up, a current solution of sharing services on the mobile device to the plurality of displays in the intelligent cockpit of the head unit is limited, and only simple text and music sharing can be implemented or needs to be implemented by using additional software. Therefore, a sharing process is complex, and flexibility and efficiency are low. How to seamlessly share application services on the mobile device with any display in the cockpit of the head unit without relying on vendors that provide application services and the head unit has become a focus of sharing.

In view of this, embodiments of this application provide a content sharing method and an electronic device. This solution may be applied to a system including a first electronic device and a second electronic device. This may be specifically applied to a scenario in which the first electronic device shares content with the second electronic device, and an effect of easily and quickly sharing content of the first electronic device with any display of the second electronic device can be implemented.

In this embodiment of this application, the first electronic device and the second electronic device are devices that have a wireless connection function. The first electronic device may communicate with the second electronic device in a wireless communication manner.

Optionally, the first electronic device and the second electronic device may access a same local area network, or may access different local areas. An example in which the first electronic device and the second electronic device are connected to the same local area network may be specifically as follows: The first electronic device and the second electronic device establish a wireless connection to a same wireless access point. In addition, the first electronic device and the second electronic device may access a same wireless fidelity (Wireless Fidelity, Wi-Fi) hotspot.

Optionally, the first electronic device and the second electronic device may alternatively access a same Bluetooth beacon (Beacon) by using a Bluetooth protocol. For another example, a communication connection may be triggered between the first electronic device and the second electronic device by using a near field communication (Near Field Communication, NFC) tag, and encrypted information is transmitted by using a Bluetooth module to perform identity authentication. After the authentication succeeds, data is transmitted in a point-to-point (Point-to-Point, P2P) manner.

In some embodiments of this application, both the first electronic device and the second electronic device have at least one display, and the first electronic device may share content in any one display of the first electronic device with one or more displays of the second electronic device for display.

For example, the first electronic device may be a terminal device, for example, a mobile phone or a tablet, and the second electronic device may be a cockpit or an electronic device installed in a cockpit.

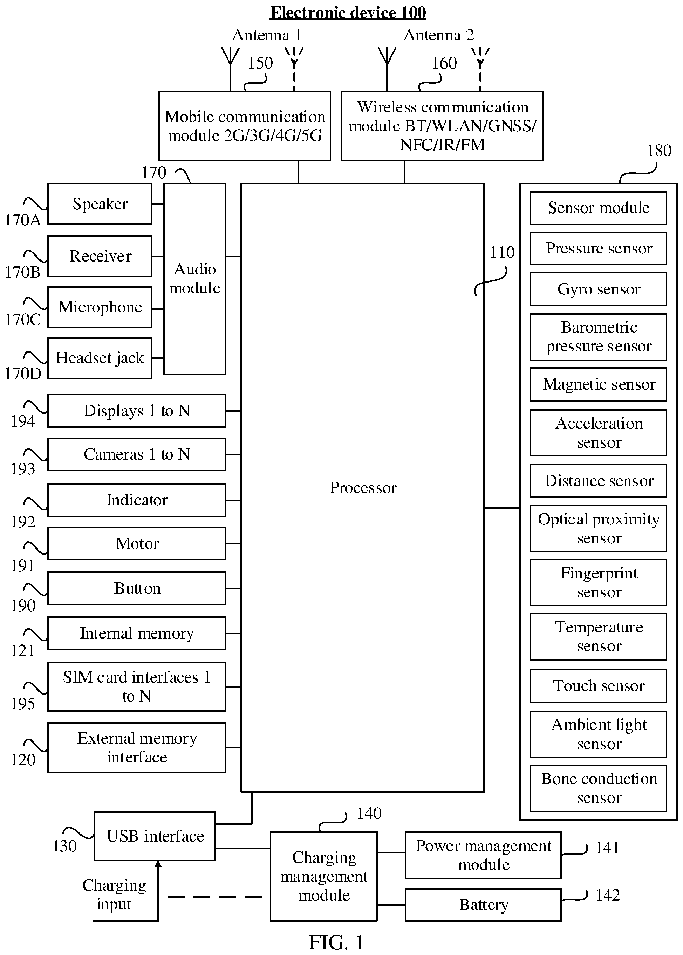

Refer to FIG. 1. The following describes a structure of an electronic device to which the method provided in an embodiment of this application is applicable.

As shown in FIG. 1, the electronic device 100 may include a processor 110, an external memory interface 120, an internal memory 121, a USB interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, an SIM card interface 195, and the like.

The sensor module 180 may include a gyro sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the electronic device 100 shown in FIG. 1 is merely an example, and does not constitute a limitation on the electronic device. In addition, the electronic device may have more or fewer components than those shown in the figure, or may combine two or more components, or may have different component configurations. Various components shown in FIG. 1 may be implemented in hardware including one or more signal processing and/or application-specific integrated circuits, software, or a combination of hardware and software.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be independent components, or may be integrated into one or more processors. The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that have/has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

Execution of the content sharing method provided in this embodiment of this application may be controlled by the processor 110 or completed by invoking another component, for example, invoking a processing program in this embodiment of this application stored in the internal memory 121, or invoking, by using the external memory interface 120, a processing program in this embodiment of this application stored in a third-party device, to control the wireless communication module 160 to perform data communication with another device, to implement intelligence and convenience of the electronic device 100, and improve user experience. The processor 110 may include different components. For example, when a CPU and a GPU are integrated, the CPU and the GPU may cooperate to perform the content sharing method provided in embodiments of this application. For example, in the content sharing method, some algorithms are executed by the CPU, and the other algorithms are executed by the GPU, to obtain fast processing efficiency.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1. The display 194 may be configured to display information entered by the user or information provided to the user and various graphical user interfaces (graphical user interface, GUI). For example, the display 194 may display a photo, a video, a web page, a file, or the like.

In this embodiment of this application, the display 194 may be an integrated flexible display, or may be a spliced display including two rigid screens and one flexible screen located between the two rigid screens.

The camera 193 (a front-facing camera or a rear-facing camera, or a camera that can serve as a front-facing camera and a rear-facing camera) is configured to capture a static image or a video. Usually, the camera 193 may include a photosensitive element such as a lens group and an image sensor. The lens group includes a plurality of lenses (convex lens or concave lens), and is configured to: collect an optical signal reflected by a to-be-photographed object, and transfer the collected optical signal to the image sensor. The image sensor generates an original image of the to-be-photographed object based on the optical signal.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store code of an operating system, an application (for example, a content sharing function), and the like. The data storage area may store data created during use of the electronic device 100.

The internal memory 121 may further store one or more computer programs corresponding to a content sharing algorithm provided in this embodiment of this application. The one or more computer programs are stored in the internal memory 121 and are configured to be executed by the one or more processors 110. The one or more computer programs include instructions, and the instructions may be used to perform the steps in the following embodiments.

In addition, the internal memory 121 may include a high-speed random access memory, or may include a nonvolatile memory, for example, at least one magnetic disk storage device, a flash memory, or a universal flash storage (universal flash storage, UFS).

Certainly, the code of the content sharing algorithm provided in embodiments of this application may be alternatively stored in an external memory. In this case, the processor 110 may run, by using the external memory interface 120, the code of the content sharing algorithm stored in the external memory.

The sensor module 180 may include a gyro sensor, an acceleration sensor, an optical proximity sensor, a fingerprint sensor, a touch sensor, and the like.

The touch sensor, also known as the "touch panel". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor may alternatively be disposed on a surface of the electronic device 100, and is at a location different from that of the display 194.

For example, the display 194 of the electronic device 100 displays a home screen, and the home screen includes icons of a plurality of applications (for example, a camera application and a WeChat application). The user taps an icon of the camera application on the home screen by using the touch sensor, to trigger the processor 110 to start the camera application and turn on the camera 193. The display 194 displays an interface of the camera application, for example, a viewfinder interface.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution of wireless communication that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110. In this embodiment of this application, the mobile communication module 150 may be further configured to: exchange information with another device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio apparatus (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In this embodiment of this application, the wireless communication module 160 is configured to establish a connection to another electronic device to perform data exchange. Alternatively, the wireless communication module 160 may be configured to access an access point device, send a control instruction to another electronic device, or receive data sent by another electronic device.

In addition, the electronic device 100 may implement audio functions, for example, music playing and recording, by using the audio module 170, the speaker 170A, the receiver 170B, the microphone 170C, the headset jack 170D, the application processor, and the like. The electronic device 100 may receive an input of the button 190, and generate a button signal input related to a user setting and function control of the electronic device 100. The electronic device 100 may generate a vibration prompt (for example, an incoming call vibration prompt) by using the motor 191. The indicator 192 of the electronic device 100 may be an indicator light, may be configured to indicate a charging state and a battery level change, and may be further configured to indicate a message, a missed call, a notification, and the like. The SIM card interface 195 in the electronic device 100 is configured to connect to a SIM card. The SIM card may be inserted into the SIM card interface 195 or removed from the SIM card interface 195, to implement contact with or separation from the electronic device 100.

It should be understood that, in actual application, the electronic device 100 may include more or fewer components than those shown in FIG. 1. This is not limited in this embodiment of this application. The electronic device 100 shown in the figure is merely an example, and the electronic device 100 may have more or fewer components than those shown in the figure, may combine two or more components, or may have different component configurations. Various components shown in the figure may be implemented in hardware, software, or in a combination of hardware and software that includes one or more signal processing and/or application-specific integrated circuits.

A software system of the electronic device 100 may use a layered architecture, an event-driven architecture, a microkernel architecture, a micro service architecture, or a cloud architecture. In the embodiments of this application, a software structure of the electronic device is described by using an Android system with a layered architecture as an example.

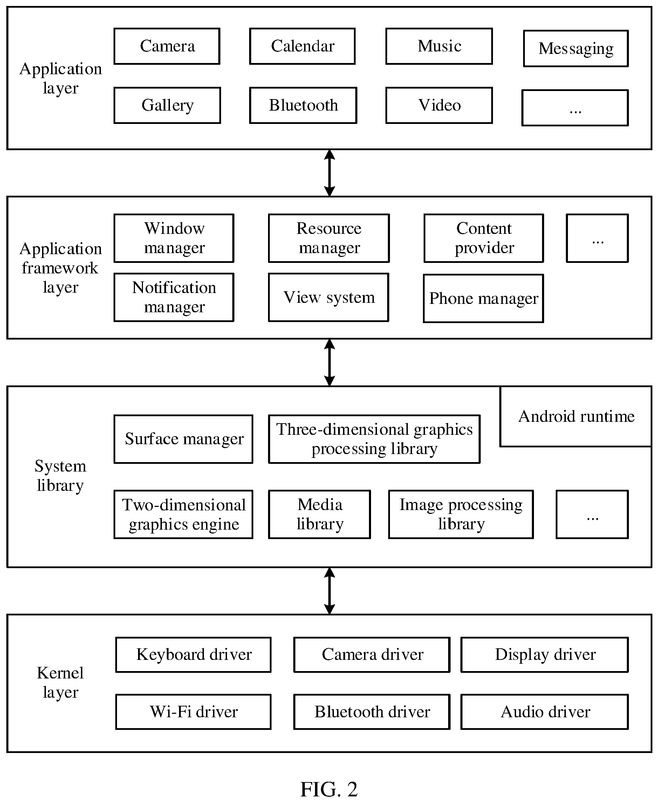

In a layered architecture, software is divided into several layers, and each layer has a clear role and task. The layers communicate with each other through a software interface. As shown in FIG. 2, this software architecture may be divided into four layers: an application layer, an application framework (framework, FWK), an Android runtime and system library, and a Linux kernel layer from top to bottom.

The application layer is the top layer of an operating system and includes native applications of the operating system, such as Camera, Gallery, Calendar, Bluetooth, Music, Video, and Messaging. An application in embodiments of this application may be referred to as an app for short, and is a software program that can implement one or more specific functions. Generally, a plurality of applications may be installed in the electronic device, for example, a camera application, a mailbox application, and a smart home control application. An application mentioned below may be a system application installed when the electronic device is delivered from the factory, or may be a third-party application downloaded by a user from a network or obtained by the user from another electronic device during use of the electronic device.

Certainly, a developer may compile an application and install the application at the layer. In a possible implementation, the application may be developed by using a Java language, and is completed by invoking an application programming interface (Application Programming Interface, API) provided by an application framework layer. A developer may interact with a bottom layer (for example, a kernel layer) of an operating system by using the application framework, to develop an application of the developer.

The application framework layer provides an application programming interface (application programming interface, API) and a programming framework for an application in the application layer. The application framework layer may include some predefined functions. The application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include information, for example, a file (for example, a document, a video, an image, or an audio) and a text.

The view system includes visual controls, for example, controls that display content, for example, texts, pictures, and documents. The view system may be configured to construct an application. An interface in a display window may include one or more views. For example, a display interface including an SMS message notification icon may include a text display view and an image display view.

The phone manager is configured to provide a communication function of the electronic device. The notification manager enables an application to display notification information in a status bar, and may be configured to convey a notification message. The notification manager may automatically disappear after a short pause without requiring a user interaction.

The Android runtime includes a core library and a virtual machine. The Android runtime is responsible for scheduling and management of the Android system.

The kernel library of the Android system includes two parts: one is a function that needs to be called in Java language, and the other is the kernel library of the Android system. The application layer and the application framework layer run on the virtual machine. Java is used as an example. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager, a media library, a three-dimensional graphics processing library (for example, OpenGL ES), and a two-dimensional graphics engine (for example, SGL). The surface manager is configured to manage a display subsystem and provide fusion of two-dimensional and three-dimensional graphics layers for a plurality of applications. The media library supports playback and recording in a plurality of commonly used audio and video formats, and static image files. The media library may support a plurality of audio and video encoding formats, for example, MPEG-4, H.564, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel (Kernel) layer provides core system services of the operating system, for example, security, memory management, process management, network protocol stack, and a driver model are all implemented based on the kernel layer. The kernel layer is also used as an abstraction layer between hardware and a software stack. The layer has many drivers related to the electronic device, mainly including a display driver, a keyboard driver used as an input device, a flash driver that is based on a memory technology device, a camera driver, an audio driver, a Bluetooth driver, a Wi-Fi driver, and the like.

It should be understood that the function service described above is merely an example. In actual application, the electronic device may alternatively be divided into more or fewer function services based on other factors, or may be divided into functions of each service in another manner, or may not be divided into function services, but works as a whole.

It should be noted that, in this embodiment of this application, both the first electronic device and the second electronic device may be implemented by using the foregoing hardware architecture and software architecture.

The solution provided in this embodiment of this application may be completed by a process service of the first electronic device and a process service of the second electronic device. For example, the first electronic device may include a multi-screen sharing service, to implement a function completed by the first electronic device in the solution provided in this application. Alternatively, the second electronic device may include a multi-screen sharing service, to implement a function completed by the second electronic device in the solution provided in this application.

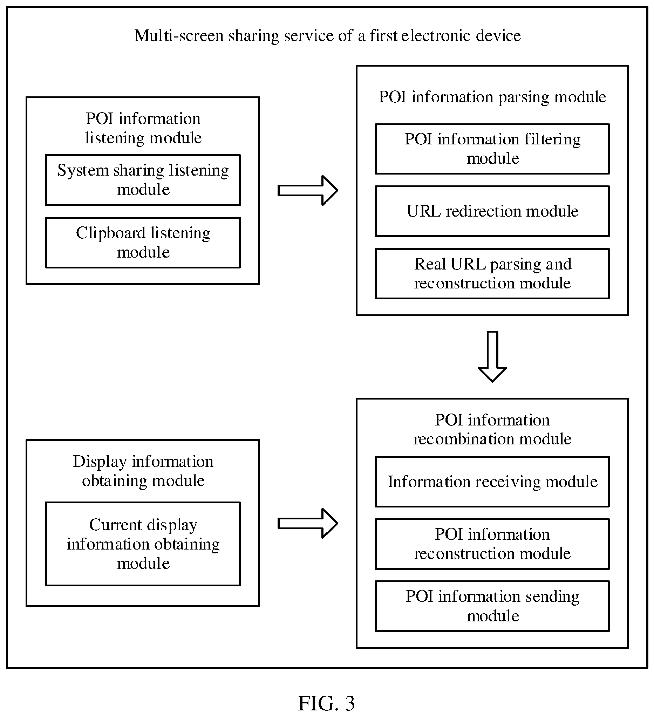

The multi-screen sharing service in the first electronic device may include four modules. As shown in FIG. 3, the four modules are as follows.

### (1) POI information listening module (PoiInfoListener)

The POI information listening module is configured to monitor and obtain initial POI information of to-be-shared content, and send the initial POI information to a POI information parsing module.

As shown in FIG. 3, the POI information listening module may further include a system sharing listening (ListenSystemShare) module and a clipboard listening (listenClipboard) module.

### (2) POI information parsing module (PoiInfoParser)

The POI information parsing module is configured to parse the initial POI information from the POI information listening module to obtain detailed configuration information of the to-be-shared content, and send the detailed configuration information to a POI information recombination module.

As shown in FIG. 3, the POI information parsing module may further include a POI information filtering (FilterPoiInfo) module, a URL redirection (RedirectPoiUrl) module, and a real URL parsing and reconstruction (ResetRealUriParams) module.

### (3) Display information obtaining (DisplayObtainer) module

The display information obtaining module is configured to obtain display information of the second electronic device from the second electronic device, and send the display information to the POI information recombination module.

As shown in FIG. 3, the display information obtaining module may include a current display information obtaining (obtainCurrentDisplayInfos) module.

### (4) POI information recombination (PoiInfoRestructer) module

The POI information recombination module is configured to perform processing, for example, recombination, on the information from the POI information parsing module and the display information obtaining module to obtain sharing indication information, and send the sharing indication information to the second electronic device, so as to share the to-be-shared content with the second electronic device.

As shown in FIG. 3, the POI information recombination module may further include an information receiving (receiveInfo) module, a POI information reconstruction (restructPoiInfo) module, and a POI information sending (sendPoiInfo) module.

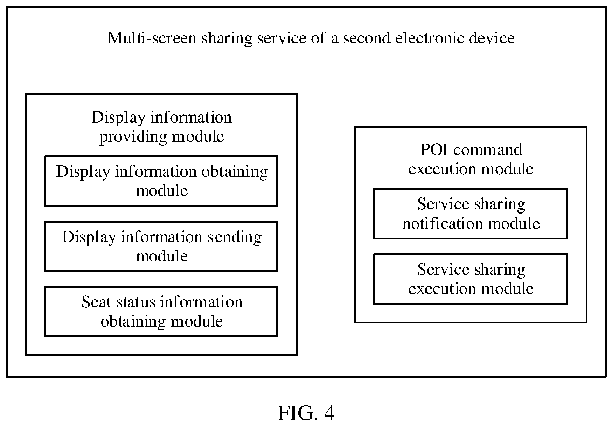

The multi-screen sharing service in the second electronic device may include two modules. As shown in FIG. 4, the two modules are as follows.

### (1) Display information providing (DisplayProvider) module

The display information providing module is configured to obtain display information of the second electronic device, so that the display information obtaining module of the first electronic device can obtain the display information of the second electronic device from the display information providing module, or the display information providing module sends the display information to the display information obtaining module of the first electronic device.

As shown in FIG. 4, the display information providing module may further include a display information obtaining (getDisplays) module and a display information sending (sendDisplayInfos) module. Optionally, the display information providing module may further include a seat status information obtaining (getSeatStatus) module.

### (2) POI command execution (PoiInfoCmder) module

The POI command execution module is configured to receive sharing indication information from the POI information recombination module of the first electronic device, and display, on a display based on the sharing indication information, content shared by the first electronic device.

As shown in FIG. 4, the POI command execution module may further include a service sharing notification (notifyServiceShare) module and a service sharing execution (exeServiceShare) module.

Specific functions of the modules in the first electronic device and the second electronic device are described in the following with reference to specific embodiments. Details are not described herein.

It should be noted that composition of the modules shown in FIG. 3 and FIG. 4 is merely an implementation of process services of the first electronic device and the second electronic device in this embodiment of this application. In actual application, composition of the process services of the first electronic device and the second electronic device may alternatively use another implementation, for example, include more or fewer modules. This is not specifically limited in this embodiment of this application.

The solution provided in this embodiment of this application is described below with reference to a specific embodiment.

An execution process of the solution provided in this embodiment of this application may be mainly divided into three phases: The first electronic device obtains detailed configuration information of to-be-shared content; the first electronic device obtains display information of the second electronic device; and the first electronic device integrates the detailed configuration information and the display information, and shares the integrated information with the second electronic device. The following describes each phase in detail.
1. The first electronic device obtains detailed configuration information of to-be-shared content.

In this embodiment of this application, the content shared by the first electronic device with the second electronic device may be any service content in the first electronic device, for example, an application service or application content of the first electronic device, that is, a service or content provided by an application (application, APP) installed in the first electronic device.

The following uses an example in which the first electronic device shares the application service with the second electronic device.

In this embodiment of this application, a user may control the first electronic device, and share the application service of the first electronic device with any display of the second electronic device for display, and the second electronic device may continue to provide the service. An application to which the application service shared by the first electronic device belongs is installed in the second electronic device.

In some embodiments of this application, a sharing operation in the first electronic device may be implemented in the following two manners.

### Manner 1: System sharing manner

In this manner, when the user chooses to share an application service, and an application to which the application service belongs registers a system sharing function, the first electronic device may directly display icons of other applications, so that the user selects a target application that needs to be shared from the icons of the other applications. After the user selects the target application, the first electronic device may generate a link of the shared application service, and send the link to the target application. The link is used to open the shared application service in the target application or another application.

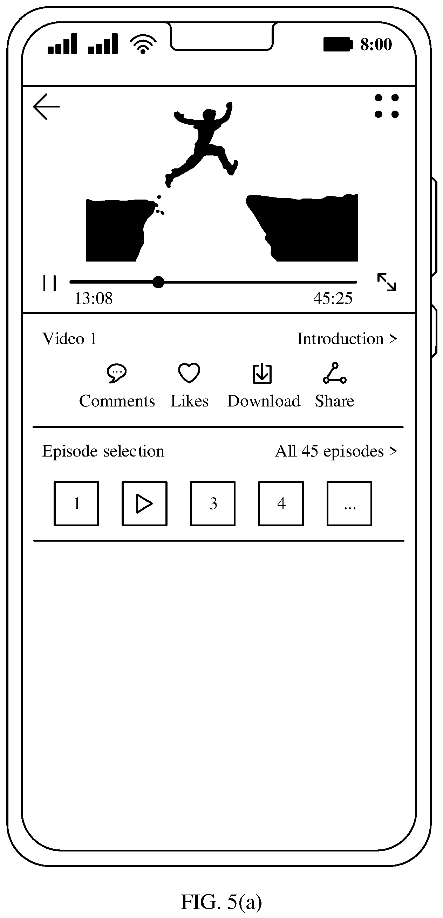

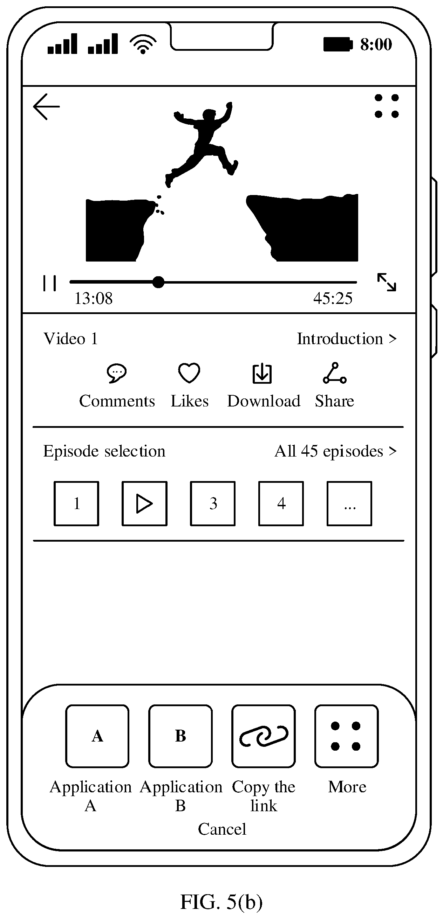

For example, as shown in a schematic diagram in FIG. 5(a), when a video application in the first electronic device plays a video, a video playing interface is displayed on a display of the first electronic device. When the user needs to share a current video service, the user may select a sharing control icon to trigger a sharing process. In response to an operation of triggering sharing by the user, the first electronic device may display an interface shown in a schematic diagram in FIG. 5(b). The interface includes icon controls of other applications (such as an application A or an application B), and the user may select a target application from the icon controls. After the user selects the target application, the first electronic device may send the link of the current video service in the target application.

### Manner 2: Copy and paste sharing manner

In this manner, when choosing to share an application service, the user may choose to copy a link of the application service. In response to an operation of copying the link by the user, the first electronic device obtains the link corresponding to the application service and caches the link on a clipboard. After starting another application, the user may select a manner of pasting the link to share the application service. The link is used to open the shared application service in the target application or another application.

For example, as shown in the schematic diagram in FIG. 5(a), when the user needs to share the current video, the user may select a sharing control icon to trigger a sharing process. In this case, the first electronic device may display the interface shown in the schematic diagram in FIG. 5(b), and the interface includes an option control of "Copy the link". The user may select the option control of "Copy the link", so that the first electronic device obtains the link that is of the video service and that is generated by the video application and caches the link in the clipboard.

In some embodiments of this application, the link of the application service that is shared by the first electronic device may be in any one of the following formats: a picture format, a text format, a graphic format, or a card format.

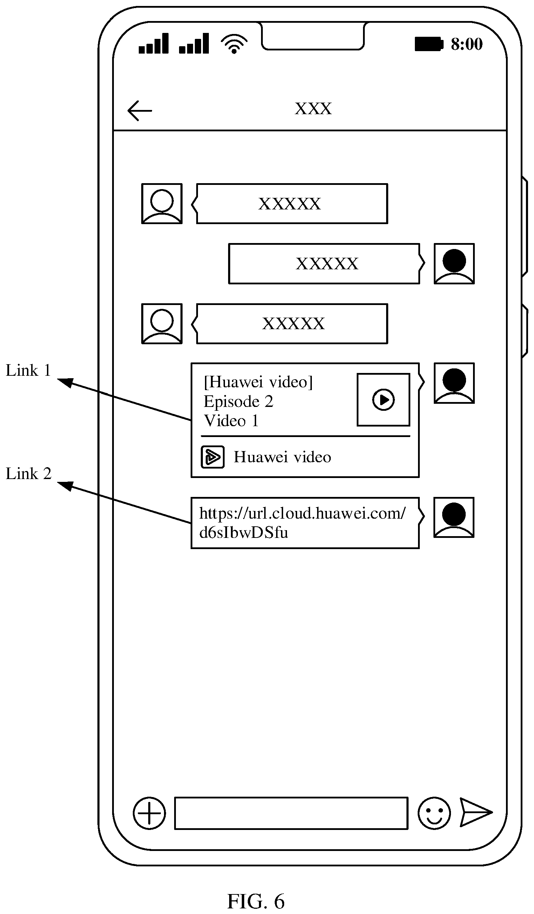

For example, when the sharing manner described in the manner 1 is used, the link of the video service that is generated by the first electronic device may be a link 1 in a card format shown in FIG. 6. For another example, when the sharing manner described in the manner 2 is used, the link of the video service that is generated by the first electronic device may be a link 2 in a text format shown in FIG. 6.

Based on the foregoing two sharing manners, the first electronic device may listen to the operation that the user controls the first electronic device to perform sharing, and obtain the initial POI information of the to-be-shared application service. The initial POI information may be a link of the application service that is generated by the application to which the to-be-shared application service belongs, for example, the link shown in FIG. 6.

Specifically, if the application in the first electronic device registers the system sharing function, the application has permission to use the system sharing manner described in the manner 1. If the application in the first electronic device does not register the system sharing function, the application has no permission to use the system sharing manner described in the manner 1, and can only use the sharing manner described in the manner 2. If the application in the first electronic device registers the system sharing function, the first electronic device may obtain, by listening to system shared content, the initial POI information of the application service that is shared from the application. If the application in the first electronic device does not register system sharing, the first electronic device may obtain, by listening to the content in the clipboard, the initial POI information of the application service that is shared from the application.

For example, the foregoing process of obtaining the initial POI information of the application service may be completed by a system sharing listening module or a clipboard listening module in the POI information listening module shown in FIG. 3. After obtaining the initial POI information of the application service, the POI information listening module sends the POI information to the POI information parsing module for parsing.

After obtaining the initial POI information of the to-be-shared application service, the first electronic device may obtain detailed configuration information of the application service through parsing based on the initial POI information. Based on the detailed configuration information, a receive end of the application service may determine related configurations such as a source, a type, a format, and a service progress of the application service, and may further obtain content of the application service, and continuously display and run the application service. Based on this, the receive end of the application service may directly jump to the application to which the application service belongs, start and run the application service.

In some embodiments of this application, the detailed configuration information of the application service includes address indication information and sharing parameter information of the application service. The address indication information is a real schema address of the application service, that is, a real redirection address of the application service. Compared with that based on the POI information, a corresponding page of the application service can be directly jumped to based on the actual schema address. This can avoid a plurality of redirection based on the POI information. The sharing parameter information indicates characteristic information of the application service. For example, the characteristic information may include information, for example, a source, a type, a format, and content of the application service.

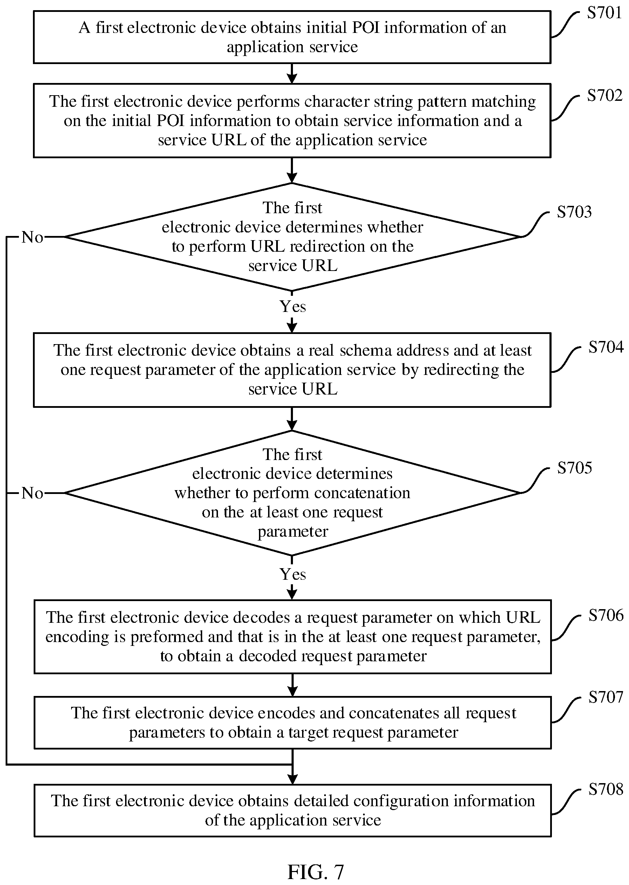

Refer to FIG. 7. A process in which the first electronic device obtains the detailed configuration information of the application service through parsing may include the following steps.

S701: A first electronic device obtains initial POI information of an application service.

For a specific implementation, refer to the description in the foregoing embodiment.

S702: The first electronic device performs character string pattern matching on the initial POI information to obtain service information and a service URL of the application service.

The first electronic device may match the initial POI information with set character strings of a plurality of modes, to identify meanings of fields in the initial POI information. The matched initial POI information may be divided into two parts: service information and a service URL. The service information indicates specific content of the application service, for example, a source, a type, and simple parameter information of the application service. The service URL indicates an address that is provided by the application service and that can be opened by a browser.

For example, this step may be completed by the POI information filtering module shown in FIG. 3, and the POI information filtering module may send the service URL of the matched initial POI information to the URL redirection module for processing.

S703: The first electronic device determines whether to perform URL redirection on the service URL. If the first electronic device determines to perform URL redirection on the service URL, step S704 is performed. If the first electronic device determines not to perform URL redirection on the service URL, step S708 is performed.

After obtaining the service URL, if it is determined that the address indicated by the service URL is a real and original address of the application service, and URL redirection cannot be performed, the first electronic device determines not to perform URL redirection. If it is determined that the address indicated by the service URL is not a real and original address of the application service, and URL redirection can be performed, the first electronic device determines to perform URL redirection.

S704: The first electronic device obtains a real schema address and at least one request parameter of the application service by redirecting the service URL.

The first electronic device may perform redirection processing on the service URL until redirection cannot be performed any longer. Then, a network connection is simulated to obtain a fetch request object. Then, request header (header) information is obtained from a request body of the fetch request object, a source schema address of the application service is obtained from the request header information, and the at least one request parameter is obtained from the request body of the fetch request object. The request parameter is a variable parameter, the at least one request parameter includes one or more request parameters indicating a unique identifier (ID) corresponding to the service information, and the unique identifier corresponding to the service information may be used to enable an application service corresponding to the service information.

For example, the foregoing steps S703 and S704 may be completed by the URL redirection module shown in FIG. 3. After obtaining the real schema address and the request parameter, the URL redirection module sends the real schema address to the POI information recombination module for processing, and sends the request parameter to the real URL parsing and reconstruction module for processing.

S705: The first electronic device determines whether to perform URL encoding on the at least one request parameter. If the first electronic device determines to perform URL encoding on the at least one request parameter, step S706 is performed. If the first electronic device determines not to perform URL encoding on the at least one request parameter, step S708 is performed.

S706: The first electronic device decodes a request parameter on which URL encoding is performed and that is in the at least one request parameter, to obtain a decoded request parameter. Step S707 is performed.

S707: The first electronic device encodes and concatenates all the request parameters to obtain a target request parameter. Step S708 is performed.

In steps S706 and S707, the first electronic device may decode the request parameters that need to be decoded. After all the decoded request parameters are obtained, unified encoding and concatenation are performed to obtain the target request parameter.

For example, steps S706 and S707 may be completed by the real URL parsing and reconstruction module shown in FIG. 3. After obtaining the target request parameter, the real URL parsing and reconstruction module sends the target request parameter to the POI information recombination module for processing.

S708: The first electronic device obtains detailed configuration information of the application service.

The detailed configuration information includes the real schema address and sharing parameter information of the application service, and the sharing parameter information may include the service information and the target request parameter.

Based on the foregoing manner, the first electronic device can obtain the detailed configuration information that may be used to directly jump to an application service interface, and when sharing the application service with the second electronic device, the first electronic device may send the detailed configuration information of the application service to the second electronic device, so that the second electronic device can easily and quickly start and display the application service. This improves efficiency and experience of sharing content.

2. The first electronic device obtains the display information of the second electronic device
In this embodiment of this application, after the first electronic device establishes the communication connection to the second electronic device, the second electronic device may monitor a status of each display of the second electronic device in real time, and may report information of each display to the first electronic device.

For example, the display information providing module of the second electronic device may interact with the display information obtaining module of the first electronic device, so that the first electronic device obtains the display information of the second electronic device. For example, the display information providing module of the second electronic device may actively send the display information to the display information obtaining module of the first electronic device after obtaining the display information. The display information providing module of the second electronic device may alternatively send the obtained display information to the display information obtaining module of the first electronic device after receiving an information reporting indication from the display information obtaining module of the first electronic device. When the first electronic device needs to display related information of the display to the user, the first electronic device may send the information reporting indication to the display information providing module of the second electronic device by using the display information obtaining module, so that the display information providing module of the second electronic device reports the display information of the second electronic device.

In some embodiments of this application, the display information of the second electronic device includes information about at least one display of the second electronic device. The information of each display includes at least identification information (displayID) of the display, and may further include status information (displaystatus) of the display.

The identification information of the display may be a preset identifier, location information of the display, or the like. The status information of the display indicates whether the display is available. In some embodiments of this application, the second electronic device may determine, based on whether the display is unlocked, whether the display is available, to determine the status information of the display. When determining that the display is unlocked, the second electronic device may determine that the display is available. When determining that the display is locked, the second electronic device determines that the display is unavailable. Alternatively, the second electronic device may determine, based on whether the display is turned on, whether the display is available. When determining that the display is in a screen-on state, the second electronic device may determine that the display is available. When determining that the display is in a screen-off state, the second electronic device determines that the display is unavailable. Optionally, the second electronic device may further determine, based on whether the display is unlocked and whether the display is turned on, whether the display is available. When determining that the display is in the unlocked state and is in the screen-on state, the second electronic device may determine that the display is available. When determining that the display is locked and is in the screen-off state, the second electronic device determines that the display is unavailable.

Optionally, when the display of the second electronic device is available, the first electronic device may choose to share content to the display. When the display of the second electronic device is unavailable, the first electronic device may not choose to share content to the display.

For example, the foregoing process of obtaining the display information may be completed by the display information obtaining module shown in FIG. 4. After obtaining the display information, the display information obtaining module sends the display information to the display information sending module.

In some embodiments of this application, when reporting the display information, the second electronic device may further report information indicating whether there is a user who may use the display. For example, when the second electronic device is applied to a vehicle, the displays of the second electronic device may be installed and disposed by corresponding to different seats in a vehicle cockpit. In this case, in addition to reporting the display information to the first electronic device, the second electronic device may further report seat status information corresponding to each display to the first electronic device. The seat status information corresponding to each display indicates whether there is a passenger in a seat corresponding to the display. If there is a passenger in the seat corresponding to the display, there is a user who may use the display. Based on this, the first electronic device side may choose to share content with the display with the passenger in the corresponding seat.

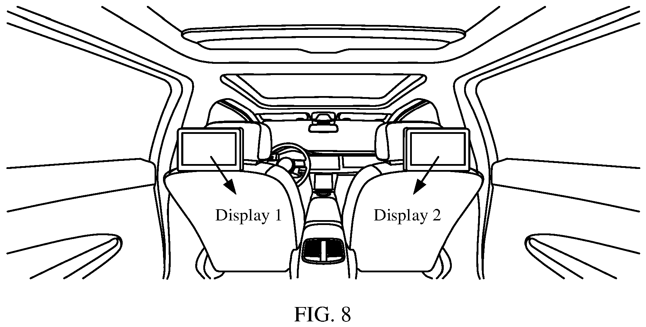

For example, as shown in FIG. 8, the vehicle cockpit has four seats in total: a front left seat (driver seat), a front right seat (front passenger seat), a rear left seat, and a rear right seat. When the second electronic device has two displays, the two displays may be respectively disposed in front of the rear left seat and in front of the rear right seat, such as a display 1 and a display 2 shown in FIG. 8. The display 1 and the display 2 can be used by a passenger in the rear left seat and a passenger in the rear right seat, respectively. When there is a passenger in the rear left seat and there is no passenger in the rear right seat, and when reporting information about the display 1, the second electronic device also reports seat status information corresponding to the display 1 and indicating that there is a passenger in the seat. When reporting information about the display 2, the second electronic device also reports seat status information corresponding to the display 2 and indicating that there is no passenger in the seat.

The second electronic device may determine, by using a seat sensor in the cockpit, whether there is a passenger in the seat, and generate corresponding seat status information.

In an optional implementation, the second electronic device may report information about all displays and seat status information corresponding to the displays to the first electronic device.

In another optional implementation, after listening the statuses of all the displays and the seats, the second electronic device may select, to report, to the first electronic device, information about the display and the seat status information corresponding to the seat having the passenger. Optionally, this manner may be performed when the user sets "only information about a display with a passenger in a seat is displayed".

For example, the foregoing process of obtaining the seat status information may be completed by the seat status information obtaining module shown in FIG. 4. After obtaining the seat status information corresponding to the display, the seat status information obtaining module sends the seat status information to the display information sending module.

The display information sending module may send the display information from the display information obtaining module to the first electronic device; or may integrate the display information from the display information obtaining module and the information from the seat status information obtaining module, and send integrated information to the first electronic device.

In some embodiments of this application, the second electronic device may report the display information and the seat status information that are obtained by listening to the first electronic device in real time; or may report, to the first electronic device after information corresponding to any display changes, information corresponding to a changed display; or report information corresponding to a plurality of latest displays to the first electronic device; or report display information and seat status information that are obtained by listening to the first electronic device at intervals or periodically. Alternatively, the second electronic device may report current display information to the first electronic device after receiving an indication from the first electronic device. Based on this, the first electronic device may independently invoke the display information monitored by the second electronic device.

After obtaining the display information and/or the seat status information from the second electronic device, the first electronic device may visualize the obtained display information of the second electronic device in the application foreground when the user selects to share content, so that the user further selects a display on which the content needs to be shared.

In some embodiments of this application, when the user selects to share content, the first electronic device may obtain the display information and/or the seat status information from the second electronic device by using the foregoing process, and then visualize the obtained display information of the second electronic device in the application foreground, so that the user can further select a display on which content needs to be shared.

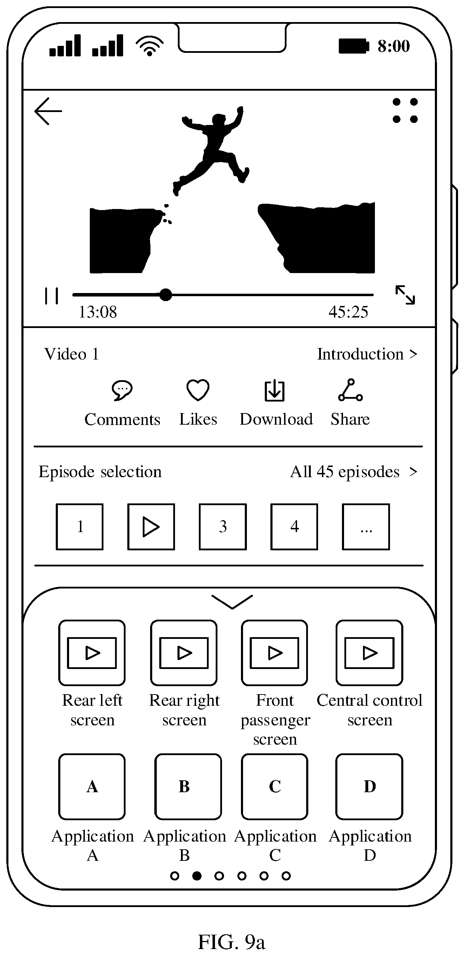

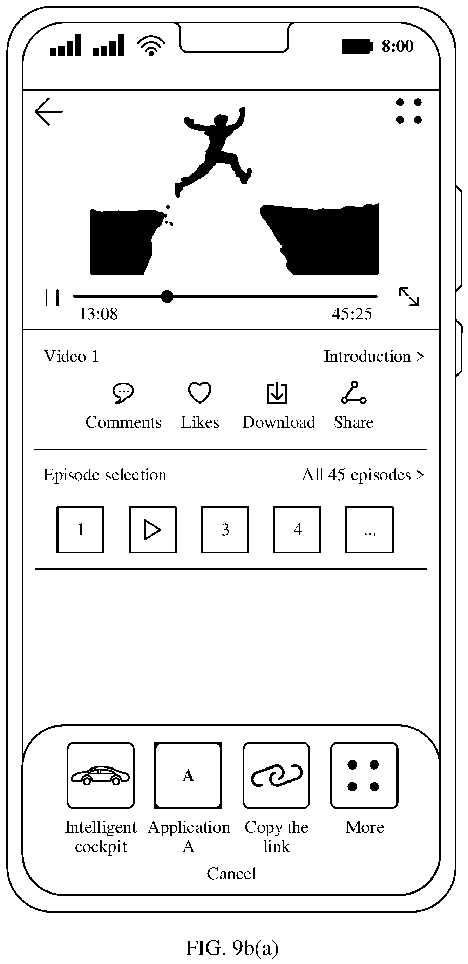

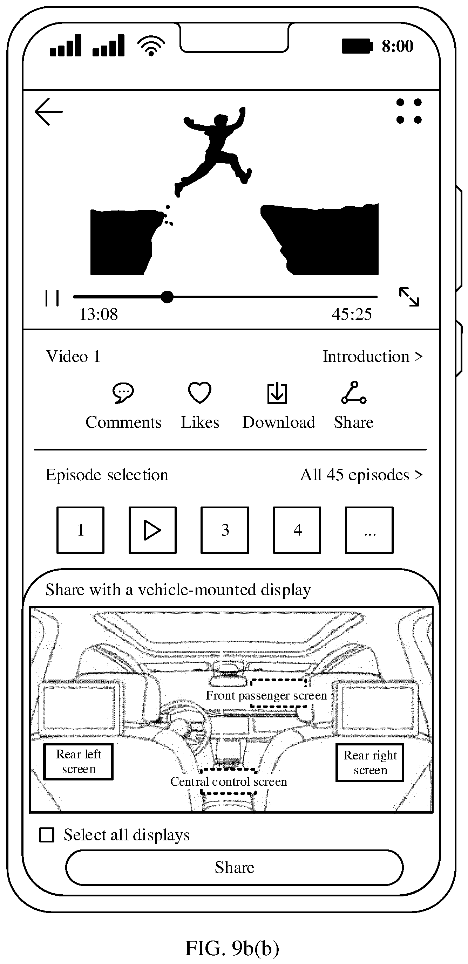

For example, based on the sharing scenario shown in the schematic diagram in FIG. 5(a), when the second electronic device is applied to a vehicle cockpit, the first electronic device may display the display information of the second electronic device in the sharing interface shown in the schematic diagram in FIG. 5(b). When the user triggers a content sharing process, the first electronic device may display an interface shown in FIG. 9a, FIG. 9b(a), or FIG. 9b(b).

The interface shown in FIG. 9a directly shows an option control of a seat corresponding to each display in the vehicle cockpit. In this case, the user may directly select the option control of the seat in the interface, to indicate to share the application service with the display corresponding to the seat.

An interface shown in a schematic diagram in FIG. 9b(a) includes an option control of a "Vehicle cockpit", and the user may select the option control of the "Vehicle cockpit" to choose to share an application service with a display in the vehicle cockpit. After the user selects the option control of the "Vehicle cockpit", the first electronic device may further display a secondary interface shown in a schematic diagram in FIG. 9b(b). The secondary interface includes information about each display in the vehicle cockpit, so that the user further selects a display for sharing an application service. For example, as shown in the schematic diagram in FIG. 9b(b), the secondary interface includes information about four displays in the vehicle cockpit: a central control screen, a front passenger screen, a rear left screen, and a rear right screen. The central control screen is configured to control the vehicle cockpit, and may be used by a passenger in the driver seat. The front passenger screen may be used by a passenger in the front passenger seat, the rear left screen may be used by a passenger in the rear left seat, and the rear right screen may be used by a passenger in the rear right seat. The user may select, in a manner of selecting an option control of a seat corresponding to the display, to share the application service to the display in the vehicle cockpit.

In an optional implementation, when displaying the display information of the second electronic device, the first electronic device may display operation options corresponding to all the displays of the second electronic device, for example, in a display manner shown in the schematic diagram in FIG. 9b(b). When specific displays are unavailable, the first electronic device may set operation options corresponding to these displays to an unavailable mode, and set only an operation option corresponding to the available display to an available mode. For example, as shown in FIG. 9b(b), when the central control screen and the front passenger screen are unavailable, and the rear left screen and the rear right screen are available, the first electronic device may display the rear left screen and the rear right screen in a mode which is different from that of the central control screen and the front passenger screen, so that the user performs differentiation.

In another optional implementation, the first electronic device may display only an operation option corresponding to an available display of the second electronic device. For example, the first electronic device may display, on the display interface, only the operation options of the rear left screen and the rear right screen that are shown in the schematic diagram in FIG. 9b(b).

Based on the first part content and the second part content, the first electronic device may obtain the detailed configuration information of the application service, and may determine, according to the user indication, the specific displays of the second electronic device to which the application service needs to be shared, so as to share the application service to the corresponding displays.

It should be noted that there is no strict time sequence limitation on implementation processes of some methods in the first part content and the second part content. For example, a process of obtaining the detailed configuration information of the application service and a process of obtaining the display information of the second electronic device may be executed in parallel, or any process may be executed first. This is not specifically limited in this embodiment of this application.

3. After the first electronic device integrates the detailed configuration information and the display information, the first electronic device shares integrated information with the second electronic device.

After the user selects the display of the second electronic device to be shared, the first electronic device may generate corresponding target display information to indicate the display selected by the user, and reorganize the target display information and the detailed configuration information of the to-be-shared application service, to obtain sharing indication information.

Specifically, the first electronic device may perform secondary concatenation on the real schema address and the target request parameter in the detailed configuration information, to construct a real application service redirection address, and encapsulate and serialize the address, the target display information, and the service information, so as to obtain the sharing indication information.

For example, the foregoing process of generating the sharing indication information may be completed by the POI information reconstruction module shown in FIG. 3. The information receiving module may be configured to: receive information, for example, target display information and detailed configuration information of an application service from another module, and send the information to the POI information reconstruction module. After generating the sharing indication information, the POI information reconstruction module may send the sharing indication information to the POI information sending module, and the POI information sending module sends the sharing indication information to the second electronic device.

After generating the sharing indication information, the first electronic device sends the sharing indication information to the second electronic device. After receiving the sharing indication information, the second electronic device may display, on a corresponding display based on the sharing indication information, content shared by the first electronic device. Therefore, the application service of the first electronic device is connected to the display of the second electronic device for running.

In some embodiments of this application, after determining the specific displays of the second electronic device to which the content is to be shared, or after sending the sharing indication information to the second electronic device, the first electronic device may continue to perform a process before the application service is shared. For example, after displaying the interface shown in FIG. 9a, FIG. 9b(a), or FIG. 9b(b) and determining, according to the user operation, the display selected by the user, the first electronic device may continue to display the interface shown in the schematic diagram in FIG. 5(a), and continue to play the video. In addition, the first electronic device generates the sharing indication information, and sends the sharing indication information to the second electronic device.

In some embodiments of this application, after receiving the sharing indication information from the first electronic device, the second electronic device determines the target display information based on the sharing indication information, and further determines specific displays to which the user expects the application service of the first electronic device to be shared. After the second electronic device determines the target display indicated by the target display information, in an optional implementation, the second electronic device may directly display, on the target display, the application service shared by the first electronic device. After displaying, on the target display, the application service shared by the first electronic device, the second electronic device may alternatively disable the application service according to a user operation. In this case, the second electronic device may continue to display originally displayed content or other content on the target display. In another optional implementation, the second electronic device may display prompt information on the target display, where the prompt information is used to prompt the user who uses the target display that the first electronic device shares the content to the display, and is further used to ask the user who uses the target display whether to accept the application service shared by the first electronic device. When the user who uses the target display determines to accept the application service shared by the first electronic device, the second electronic device displays, on the target display, the application service shared by the first electronic device.

For example, the foregoing prompting process may be completed by the service sharing notification module shown in FIG. 4.

When the user chooses to accept the application service shared by the first electronic device, the second electronic device may determine the detailed configuration information of the application service based on the sharing indication information, obtain the application service based on the detailed configuration information of the application service, display the application service on the target display, and continue to run the application service.

For example, the foregoing process may be completed by the service sharing execution module shown in FIG. 4.

In a possible case, when the second electronic device is applied to the cockpit, a multi-user mechanism may be used for managing the at least one display of the second electronic device. That is, each display of the second electronic device corresponds to one user, and each display is controlled by a corresponding user. Based on this, after the first electronic device shares the application service to the one or more displays, each display may perform different processing and display different content based on control of the corresponding user, so as to implement independent application service sharing and control between different displays. Specifically, the second electronic device may bind the real schema address of the application service that is included in the sharing indication information to the intent, and start the connection service by using the intent.

In another possible case, when the second electronic device is applied to the cockpit, a multi-screen mechanism may be used for managing the at least one display of the second electronic device. That is, the at least one display of the second electronic device may correspond to one user, and is controlled by the user. One of the at least one display may be used as a primary screen. For example, the primary screen may be a target display indicated by the target display information included in the sharing indication information, and the sharing indication information controls only display of shared content on the primary screen. Specifically, the second electronic device may bind the real schema address of the application service that is included in the sharing indication information to the intent, add identification information of the primary screen to the intent, and then start the connection service by using the intent. A display other than the primary screen may display no content, or may display content that is the same as that on the primary screen, or may display content that is different from that on the primary screen. This is not specifically limited in this embodiment of this application.

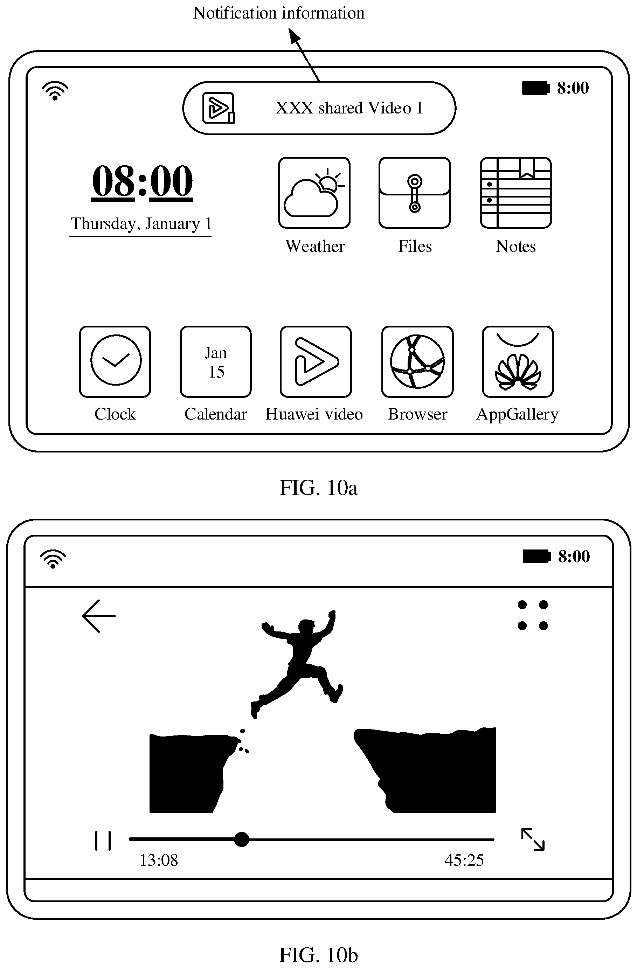

For example, based on the video service interface shown in the schematic diagram in FIG. 5(a), when the first electronic device shares the video service with the display of the second electronic device, the display of the second electronic device may display the notification information shown in FIG. 10a in the current display interface (any interface being displayed, for example, the desktop interface shown in FIG. 10a), to prompt the user who uses the display to determine whether to accept the video service shared by the first electronic device. When the user does not choose to accept the video service shared by the first electronic device (for example, the user taps an area of the notification information), the second electronic device may continue to display the current interface without performing additional processing. When the user chooses to accept the video service shared by the first electronic device, after obtaining the video service, the second electronic device may directly display the video service interface shown in FIG. 10b. Content displayed in the video service interface is consistent with content of the video service shared by the second electronic device. That is, the content displayed in the video service interface is consistent with content in the interface shown in the schematic diagram in FIG. 5(a), both are interfaces for playing the video in the video application, and information, for example, a progress of the played video is consistent. Optionally, in the foregoing scenario, when the first electronic device shares the video service with the display of the second electronic device, the second electronic device may directly display the video service interface shown in FIG. 10b after obtaining the video service. After the second electronic device displays the video service interface shown in FIG. 10b, both the first electronic device and the second electronic device may continue to perform video playing or other processing according to an indication of a corresponding user, and the first electronic device and the second electronic device do not interfere with each other and independently perform corresponding processing. For example, after the second electronic device displays the video service interface shown in FIG. 10b, the first electronic device and the second electronic device play a video by using a video service corresponding to a video application of the first electronic device and the second electronic device, respectively. When the user controls a playing speed (for example, double speed playing) of the video by performing an operation on the second electronic device, the second electronic device may adjust the playing speed of the video in response to the operation performed by the user, and the first electronic device side still plays the video at a normal speed.

The following describes the solution provided in this embodiment of this application with reference to a specific example.

In this example, a solution is described by using an example in which the first electronic device is a mobile phone and the second electronic device is an intelligent cockpit equipped with a plurality of displays, and is described with reference to a scenario in which the mobile phone shares an application service of a third-party application with a display in the intelligent cockpit. In this scenario, a same third-party application is installed in both the first electronic device and the second electronic device. The multi-screen sharing service that is in the first electronic device and that is used to complete the solution provided in this embodiment of this application may be classified into a sharing listening service (SystemShare/Clipboard Listen Service) and a mobile sharing service (MobileShare Service). The sharing listening service is used to obtain detailed configuration information of an application service and obtain information about a display in the cockpit from the intelligent cockpit. The mobile sharing service is used to share the application service with the display in the intelligent cockpit based on the information obtained by the listening service. The multi-screen sharing service that is in the intelligent cockpit and that is used to complete the solution provided in embodiments of this application may be classified into a display listening service (Displays Get Service) and a cockpit sharing service (CockpitShare Service). The display listening service is used to monitor a status of a display in the intelligent cockpit. The cockpit sharing service is used to receive, display, and continue to run the application service shared by the mobile phone.

For example, the intelligent cockpit may be the cockpit shown in FIG. 8. In the intelligent cockpit, a rear left seat and a rear right seat are respectively equipped with corresponding displays, that is, a display 1 and a display 2. The mobile phone may be a mobile phone carried and used by a passenger in a front passenger seat in the intelligent cockpit. When the passenger in the front passenger seat starts an application in the mobile phone and wants to share a service of the application with a passenger in the rear left seat or the rear right seat, the application service may be shared with the display 1 and the display 2 for display by using the method provided in this embodiment of this application. Passengers in the rear left seat and the rear right seat can easily and quickly view and use the application service shared by the passenger in the driver seat through the displays in front of the passengers.

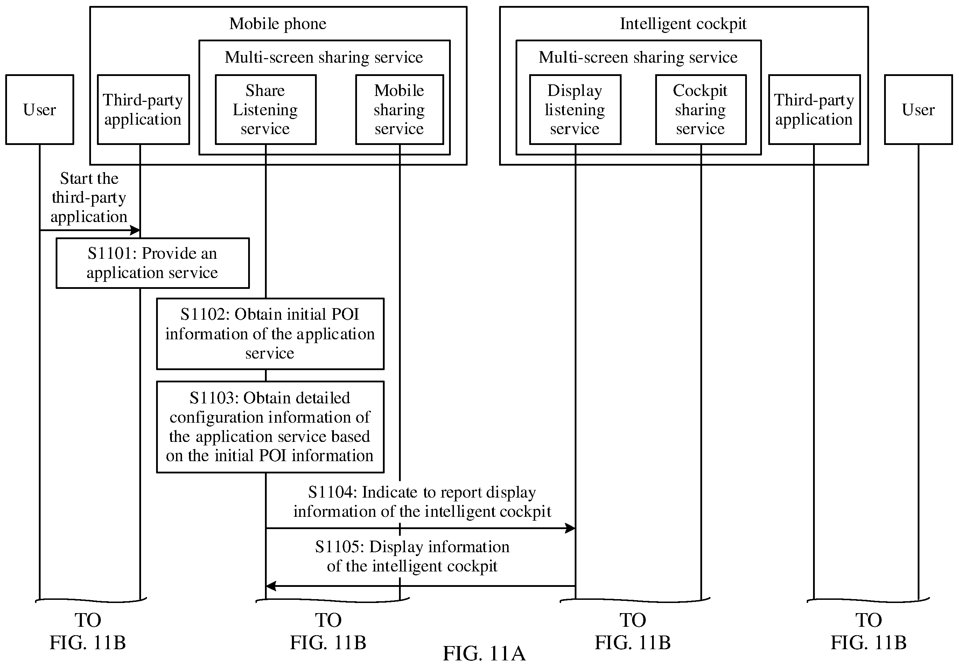

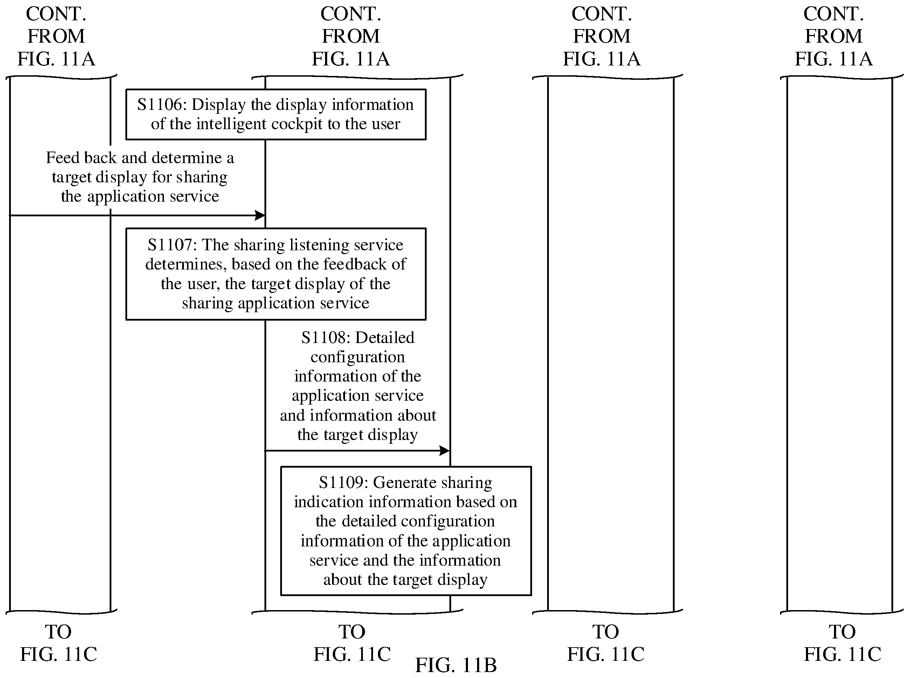

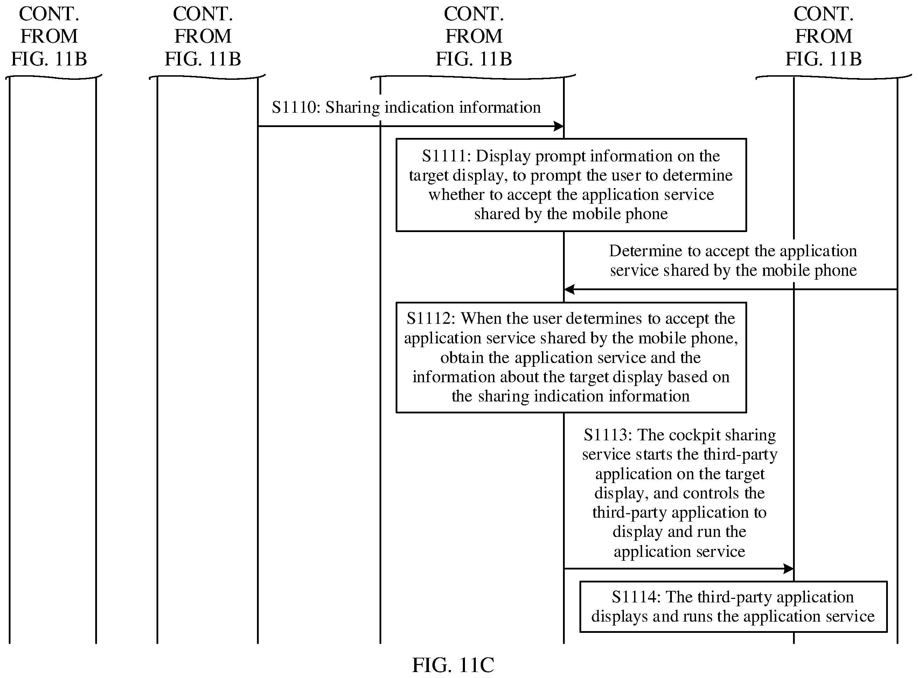

Refer to FIG. 11A, FIG. 11B, and FIG. 11C. Based on the foregoing scenario, a process of the content sharing method provided in this embodiment of this application may include the following steps.

S1101: A third-party application provides an application service.

The third-party application provides the application service for a user after the user starts the third-party application in the first electronic device.

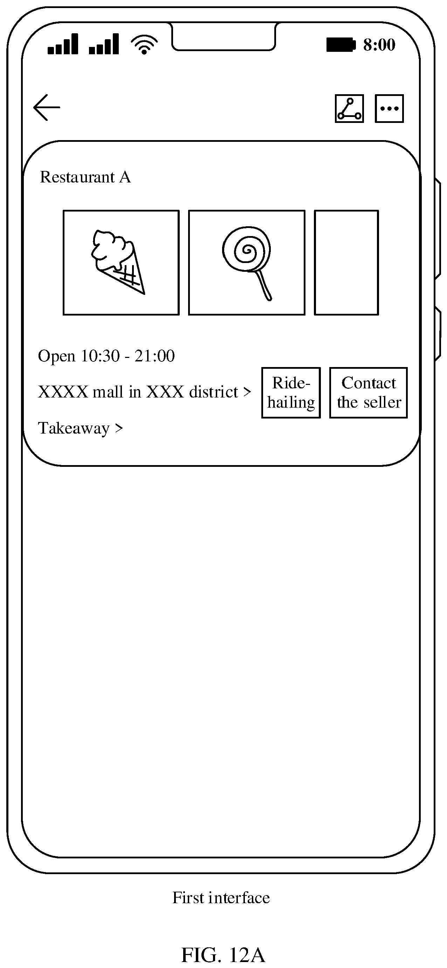

For example, when a passenger in a driver seat in an intelligent cockpit starts a food application in a mobile phone and searches for a restaurant A, the mobile phone may display a first interface shown in FIG. 12A, that is, an interface of an application service. The interface displays specific information about the restaurant A. When the passenger in the driver seat wants to share the current application service (interface) with a passenger in a rear seat for viewing, the passenger may tap a "Sharing control" in the first interface shown in FIG. 12A to trigger a sharing process.

S1102: A sharing listening service obtains initial POI information of the application service.

When a sharing operation performed by the user on the application service is listened, the sharing listening service of the mobile phone obtains the initial POI information of the application service by listening to system shared content or clipboard content.

S1103: The sharing listening service obtains detailed configuration information of the application service based on the initial POI information.

S1104: The sharing listening service indicates a display listening service to report display information of the intelligent cockpit.

Optionally, when the sharing operation performed by the user on the application service is listened, the sharing listening service of the mobile phone may indicate the display listening service of the intelligent cockpit to report the display information of the intelligent cockpit.

S1105: The display listening service reports the display information of the intelligent cockpit to the sharing listening service.

The display listening service of the intelligent cockpit sends, to the sharing listening service of the mobile phone according to an indication of the sharing listening service of the mobile phone, the display information of the intelligent cockpit that is obtained by listening.

S1106: The sharing listening service displays the display information of the intelligent cockpit to the user.

The sharing listening service displays, to the user, option controls corresponding to displays in the intelligent cockpit, so that the user selects, from the option controls, a display that needs to share the application service.

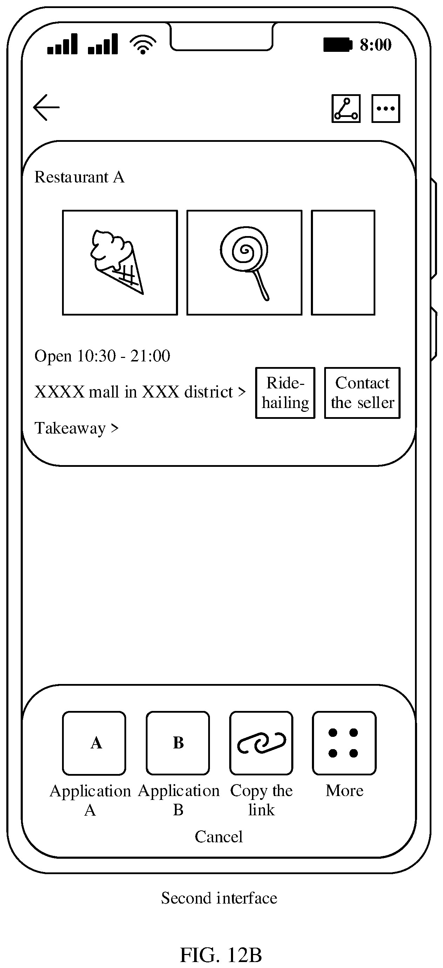

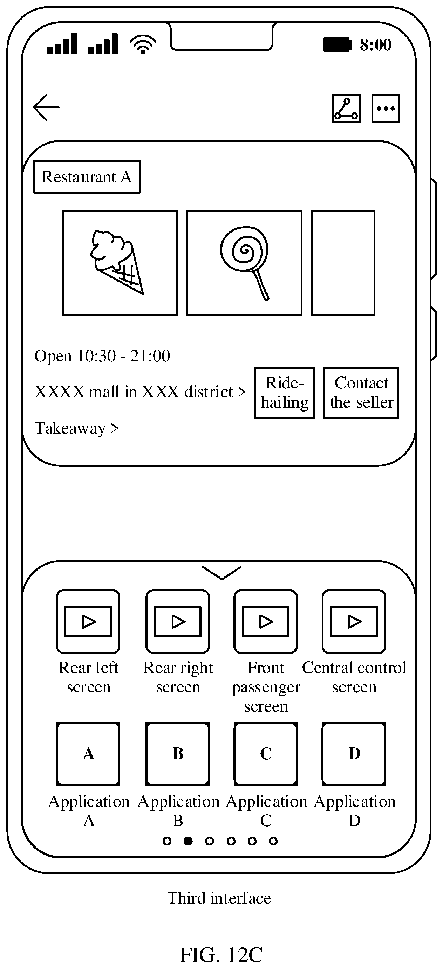

For example, after the user taps the "Sharing control" in the first interface shown in FIG. 12A to trigger the sharing process, the mobile phone may display a second interface shown in FIG. 12B, and the interface includes an option control of "Copy the link". The user may trigger, by performing an operation on the option control, the mobile phone to display a third interface shown in FIG. 12C, and the interface includes option controls corresponding to different displays in the vehicle cockpit. In this case, the user may directly select the option control of the display from the option controls, to indicate to share the application service with the corresponding display.

S1107: The sharing listening service determines a target display of the sharing application service based on a feedback of the user.

S1108: The sharing listening service sends the detailed configuration information of the application service and the information about the target display to the mobile sharing service.

S1109: The mobile sharing service generates sharing indication information based on the detailed configuration information of the application service and information about the target display.

The sharing indication information indicates the intelligent cockpit to display and run the application service on the target display after obtaining the application service based on the detailed configuration information of the application service.

S1110: The mobile sharing service sends the sharing indication information to a cockpit sharing service.

S1111: The cockpit sharing service displays prompt information on the target display, to prompt the user to determine whether to accept the application service shared by the mobile phone.

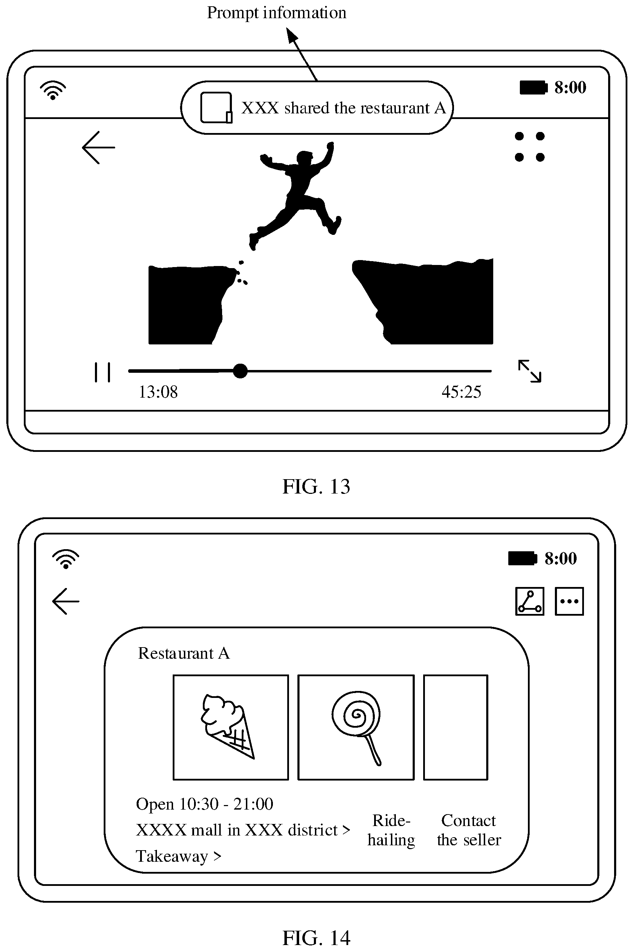

For example, the cockpit sharing service may add the prompt information, for example, the prompt information in an interface shown in FIG. 13, in a current display interface of the target display. The prompt information is used to prompt a user who uses the display to determine whether to accept the application service shared by the first electronic device.

S1112: When the user determines to accept the application service shared by the mobile phone, the cockpit sharing service obtains the application service and the information about the target display based on the sharing indication information.

S1113: The cockpit sharing service starts the third-party application on the target display, and controls the third-party application to display and run the application service.

S1114: The third-party application displays and runs the application service.

After the third-party application displays and runs the application service, content on the target display is updated to a task on an interface corresponding to the application service.

For example, the third-party application may control display of an interface shown in FIG. 14. The interface is an interface of the application service shared by the mobile phone, and content in the interface is the same as content included in the first interface shown in FIG. 12A. For the user, the content displayed on the target display directly jumps from the interface shown in FIG. 13 to the interface shown in FIG. 14. Therefore, content in the mobile phone can be seamlessly transferred to the display of the cockpit for display, thereby improving a sense of interaction experience.

It should be noted that the specific implementation process provided in the foregoing examples is merely an example of a method process applicable to embodiments of this application. For specific implementation, refer to the description in the foregoing embodiments. In addition, an execution sequence of the foregoing steps may be correspondingly adjusted according to an actual requirement, and other steps may be added, or some steps may be reduced. For example, steps S1104 to S1107 may be performed earlier than steps S1102 and S1103, or may be performed synchronously with steps S1102 and S1103.

In the foregoing embodiment, the user may seamlessly share, in the intelligent cockpit, the service of the third-party application on the mobile device with the display in the intelligent cockpit, so that other users in the intelligent cockpit can easily and quickly share the service content. In addition, in a service sharing process, the third-party application and the cockpit do not need to be adapted and modified, and an original framework of the mobile device, a cockpit device, and the third-party application is not affected. Therefore, the solution is feasible, and good use experience can be obtained.

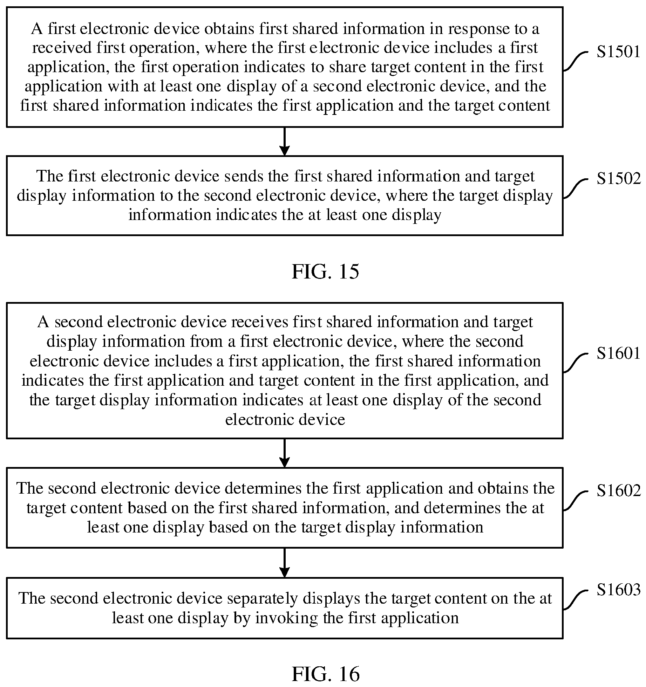

Based on the foregoing embodiments and a same concept, an embodiment of this application further provides a content sharing method, applied to the first electronic device. As shown in FIG. 15, the method includes the following steps.

S1501: A first electronic device obtains first shared information in response to a received first operation, where the first electronic device includes a first application, the first operation indicates to share target content in the first application with at least one display of a second electronic device, and the first shared information indicates the first application and the target content.

In this embodiment of this application, the first electronic device may invoke the first application to display the target content, and may share the target content with the second electronic device based on an operation of a user after establishing a communication connection to the second electronic device.

In some embodiments of this application, before receiving the first operation, the first electronic device may first determine information about a display of the second electronic device, and display the information to the user in a process of receiving the first operation. Alternatively, the first electronic device may determine the information about the display of the second electronic device in a process of receiving the first operation, and display the information to the user. For example, in the process of receiving the first operation, the first electronic device may obtain the information about the display of the second electronic device from the second electronic device after receiving a sub-operation of triggering sharing of the target content by the user, display the information about the display of the second electronic device to the user, and then determine the at least one display based on a sub-operation of selecting a display by the user. In this way, receiving of the first operation and obtaining of the corresponding shared information are completed.

The first electronic device may determine the information about the display of the second electronic device based on first indication information from the second electronic device, where the first indication information indicates a plurality of displays of the second electronic device. For example, the first indication information may be option controls of the plurality of displays shown in the schematic diagram in FIG. 9a or in FIG. 9b(b).

Optionally, the first indication information further indicates statuses of the plurality of displays of the second electronic device, where the status of the display includes an unlocked state and a locked state, and may further include a screen-on state and a screen-off state in the foregoing embodiment.

In some embodiments of this application, the first operation received by the first electronic device includes a second operation and a third operation, the second operation indicates to share the target content, and the third operation is used to select the at least one display from the plurality of displays of the second electronic device. A process in which the first electronic device receives the first operation may include: The first electronic device receives the second operation; and the first electronic device displays second indication information in response to the second operation, and then receives the third operation. The second indication information indicates the plurality of displays. Optionally, before displaying the second indication information, the first electronic device may first determine that the plurality of displays of the second electronic device are in an unlocked state or a screen-on state, so as to ensure that the user selects, from available displays, a display on which content needs to be shared.

For example, the target content in the first application may be the application service in the foregoing embodiment, that is, the target content is an application service provided by the first application. In this case, the second operation may be an operation that is of sharing the target content and that is performed by the user in the system sharing manner or a copy and paste sharing manner in the foregoing embodiment. The third operation may be an operation of selecting, by the user, the at least one display from the plurality of displays of the second electronic device. For example, the second operation may be an operation that the user taps a sharing control icon shown in the schematic diagram in FIG. 5(a). After receiving the operation, the first electronic device may display the interface shown in FIG. 9a. In this case, option controls corresponding to the plurality of displays in the interface shown in FIG. 9a are the second indication information, and the third operation is an operation of selecting, by the user, the at least one display from the plurality of displays shown in FIG. 9a.

In some embodiments of this application, after receiving the first operation, the first electronic device may first obtain second shared information, and then obtain the first shared information based on the second shared information. The second shared information indicates a sharing link that is of the target content and that is generated by the first application.

For example, the second shared information may be the initial POI information in the foregoing embodiment, that is, a link of the application service that is generated by the first application. For example, the second shared information may be a link 1 or a link 2 shown in FIG. 6. For example, the first shared information may be the detailed configuration information in the foregoing embodiment, and the target content may be directly located based on the information, so as to invoke the first application to display the target content.

When determining the first shared information based on the second shared information, the first electronic device may first perform character string matching on the second shared information to obtain content indication information and first address information that are of the target content, and then, determine the first shared information based on the content indication information and the first address information. The content indication information indicates the target content, and the first address information is used to determine an address for obtaining the target content. Optionally, the first address information is a uniform resource locator.

For example, the content indication information may be the sharing parameter information in the foregoing embodiment, and specific content of the target content may be determined based on the information. The first address information may be the service URL in the foregoing embodiment.

In some embodiments of this application, in an optional implementation, the first electronic device may use the content indication information and the first address information as the first shared information. For example, when the first address information is the foregoing service URL, if redirection processing cannot be further performed on the URL, it may be determined that the URL is a real source address of the target content, and the content indication information and the first address information may be directly used as the first shared information.

In another optional implementation, the first electronic device may redirect the first address information to obtain second address information, and use the content indication information and the second address information as the first shared information. The second address information indicates the address for obtaining the target content. For example, when the first address information is the foregoing service URL, if redirection processing can be further performed on the URL, redirection processing can be performed on the URL to obtain the real source address of the target content, that is, a real schema address. Then, the content indication information and the second address information obtained after redirection are used as the first shared information.

S1502: The first electronic device sends the first shared information and target display information to the second electronic device, where the target display information indicates the at least one display.

After the first electronic device sends the first shared information and the target display information to the second electronic device, the second electronic device may display the target content based on the first shared information and the target display information.

In some embodiments of this application, the first electronic device may integrate the first shared information and the target display information, and then send integrated information to the second electronic device. For example, the target display information may be the display information described in the foregoing embodiment. The information obtained after the first shared information and the target display information are integrated may be the sharing indication information described in the foregoing embodiment.

In some embodiments of this application, after sending the first shared information and the target display information to the second electronic device, the first electronic device may continue to perform a process before sharing the target content, for example, continue to display the target content. In addition, the first electronic device may execute a corresponding process based on the operation of the user. For example, when the user controls updating of the target content, the first electronic device may update the target content in response to the fourth operation performed by the user.

Based on the foregoing embodiments and a same concept, an embodiment of this application further provides a content sharing method, applied to the second electronic device. As shown in FIG. 16, the method includes the following steps.

S1601: A second electronic device receives first shared information and target display information from a first electronic device, where the second electronic device includes a first application, the first shared information indicates the first application and target content in the first application, and the target display information indicates at least one display of the second electronic device.

In this embodiment of this application, after establishing a communication connection to the first electronic device, the second electronic device and the first electronic device may accept and display the target content shared by the first electronic device.

In some embodiments of this application, the second electronic device has a plurality of displays. Before accepting the target content shared by the first electronic device, the second electronic device may send first indication information to the first electronic device, to indicate information about the plurality of displays of the second electronic device to the first electronic device, so that the first electronic device side selects, from the plurality of displays, the at least one display on which the target content needs to be shared. For details of the method, refer to the description in the foregoing embodiment. Details are not described herein again.

S1602: The second electronic device determines the first application and obtains the target content based on the first shared information, and determines the at least one display based on the target display information.

In this embodiment of this application, if the first shared information includes address information (first address information or second address information) and content indication information, the second electronic device may locate an address of the target content based on the address information, and obtain detailed content of the target content from the address based on the content indication information, so as to invoke the first application to display the target content. The second electronic device may determine, based on the target display information, specific displays on which the target content is displayed. Therefore, based on the first shared information and the target display information, the second electronic device may obtain and display the target content, to implement a content sharing effect from the first electronic device to the second electronic device.

S1603: The second electronic device separately displays the target content on the at least one display by invoking the first application.

In some embodiments of this application, after displaying, on the at least one display, the target content shared by the first electronic device, the second electronic device may independently perform various subsequent processing processes, for example, continue to display the target content, update the target content, or display other content. For example, the second electronic device may update the target content displayed on a target display in response to a fifth operation performed by a user. The target display is any display in the at least one display. For example, when the target content is a video service, the fifth operation may be an operation of controlling the video playing speed described in the foregoing embodiment, and the second electronic device may adjust the video playing speed based on the operation.

In some embodiments of this application, the foregoing steps S1601 to S1603 may be performed after the foregoing step S1503. Based on this, the first electronic device and the second electronic device may collaboratively complete a process of sharing and displaying the target content, thereby implementing an effect of easy and efficient content sharing between the two electronic devices.

For specific steps performed by the first electronic device or the second electronic device in the method shown in FIG. 15 or FIG. 16, refer to the foregoing embodiment. Details are not described herein again.

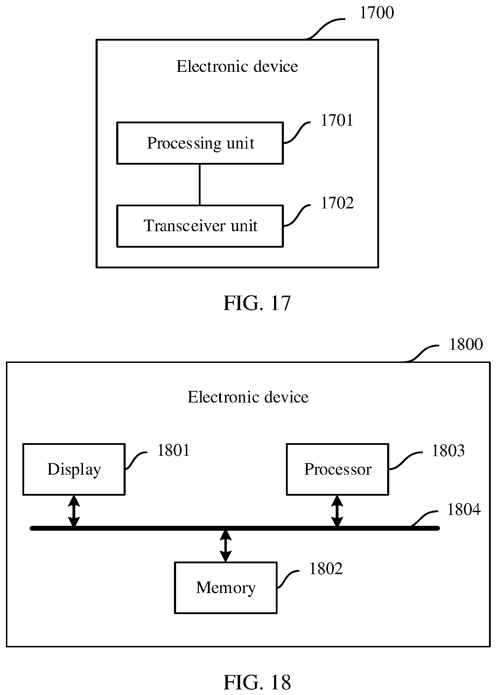

Based on the foregoing embodiments and a same concept, an embodiment of this application further provides an electronic device. As shown in FIG. 17, the electronic device 1700 includes a processing unit 1701 and a transceiver unit 1702. The processing unit 1701 and the transceiver unit 1702 cooperate with each other, to implement the method performed by the first electronic device or the second electronic device in the content sharing method provided in embodiments of this application.

Based on the foregoing embodiments and a same concept, an embodiment of this application further provides an electronic device. The electronic device is configured to implement the method performed by the first electronic device or the second electronic device in the content sharing method provided in embodiments of this application. As shown in FIG. 18, the electronic device 1800 may include a display 1801, a memory 1802, one or more processors 1803, and one or more computer programs (not shown in the figure). The foregoing components may be coupled through one or more communication buses 1804.

The display 1801 is configured to display a related user interface, for example, an image, a video, and an application interface. The memory 1802 stores one or more computer programs (code), and the one or more computer programs include computer instructions. The one or more processors 1803 invoke the computer instructions stored in the memory 1802, so that the electronic device 1800 performs the content sharing method provided in this embodiment of this application.

During specific implementation, the memory 1802 may include a high-speed random access memory, and may also include a non-volatile memory, for example, one or more magnetic disk storage devices, a flash memory device, or another non-volatile solid-state storage device. The memory 1802 may store an operating system (briefly referred to as a system below), for example, an embedded operating system like Android, iOS, Windows, or Linux. The memory 1802 may be configured to store an implementation program in this embodiment of this application. The memory 1802 may further store a network communication program. The network communication program may be used to communicate with one or more additional devices, one or more user equipments, or one or more network devices. The one or more processors 1803 may be a general-purpose central processing unit (Central Processing Unit, CPU), a microprocessor, an application-specific integrated circuit (Application-Specific Integrated Circuit, ASIC), or one or more integrated circuits configured to control execution of programs of the solutions of this application.

It should be noted that FIG. 18 is merely an implementation of the electronic device 1800 provided in this embodiment of this application. In actual application, the electronic device 1800 may further include more or fewer components. This is not limited herein.

Based on the foregoing embodiments and a same concept, an embodiment of this application further provides a computer-readable storage medium. The computer-readable storage medium stores a computer program. When the computer program is run on a computer, the computer is enabled to perform the content sharing method provided in the foregoing embodiment.

Based on the foregoing embodiments and a same concept, an embodiment of this application further provides a computer program product. The computer program product includes a computer program or instructions. When the computer program or the instructions is/are run on a computer, the computer is enabled to perform the content sharing method provided in the foregoing embodiment.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the process or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

Solely the scope of the appended claims is limiting the present application.

## Claims

1. A content sharing method, applied to a first electronic device, wherein the first electronic device comprises a first application, and the method comprises:
obtaining (S1501), by the first electronic device, first shared information in response to a received first operation, wherein the first operation indicates to share target content in the first application with at least one display of a second electronic device, and the first shared information indicates the first application and the target content; and
sending (S1502), by the first electronic device, the first shared information and target display information to the second electronic device, wherein the target display information indicates the at least one display,
wherein the obtaining (S1501), by the first electronic device, first shared information comprises: obtaining (S701), by the first electronic device, second shared information, wherein the second shared information indicates a sharing link that is of the target content and that is generated by the first application; and
determining, by the first electronic device, the first shared information based on the second shared information,
wherein the determining, by the first electronic device, the first shared information based on the second shared information comprises:
performing (S702), by the first electronic device, character string matching on the second shared information, to obtain content indication information and first address information of the target content, wherein the content indication information indicates the target content, and the first address information is used to determine an address for obtaining the target content; and
determining, by the first electronic device, the first shared information based on the content indication information and the first address information,
wherein before the obtaining (S1501), by the first electronic device, first shared information in response to a received first operation, the method further comprises:
receiving, by the first electronic device, the first operation after receiving first indication information from the second electronic device, wherein the first indication information indicates a plurality of displays of the second electronic device,
wherein the first operation comprises a second operation and a third operation, the second operation indicates to share the target content, and the third operation is used to select the at least one display from the plurality of displays; and
the receiving, by the first electronic device, the first operation comprises:
receiving, by the first electronic device, the second operation;
displaying, by the first electronic device, second indication information in response to the second operation, wherein the second indication information indicates the plurality of displays; and
receiving, by the first electronic device, the third operation.

2. The method according to claim 1, wherein the first address information is a uniform resource locator; and the determining, by the first electronic device, the first shared information based on the content indication information and the first address information comprises:
using, by the first electronic device, the content indication information and the first address information as the first shared information; or
redirecting (S704), by the first electronic device, the first address information to obtain second address information, wherein the second address information indicates the address for obtaining the target content; and
using, by the first electronic device, the content indication information and the second address information as the first shared information.

3. The method according to claim 1 or 2, wherein the first indication information further indicates statuses of the plurality of displays, and the status comprises an unlocked state indicating that a display is available, or a locked state indicating that a display is unavailable; and
before the displaying, by the first electronic device, second indication information in response to the second operation, the method further comprises:
determining, by the first electronic device based on the first indication information, that all of the plurality of displays are in the unlocked state.

4. The method according to any one of claims 1 to 3, wherein before the obtaining, by the first electronic device, first shared information in response to a received first operation, the method further comprises:
displaying, by the first electronic device, the target content by invoking the first application; and
after the sending, by the first electronic device, the first shared information and target display information to the second electronic device, the method further comprises:
updating, by the first electronic device, the target content in response to a received fourth operation for controlling updating of the target content.

5. A content sharing method, applied to a second electronic device, wherein the second electronic device comprises a first application, and the method comprises:
receiving (S1601), by the second electronic device, first shared information and target display information from a first electronic device, wherein the first shared information indicates the first application and target content in the first application, and the target display information indicates at least one display of the second electronic device;
determining (S1602), by the second electronic device, the first application and obtaining the target content based on the first shared information, and determining the at least one display based on the target display information; and
separately displaying (S1603), by the second electronic device, the target content on the at least one display by invoking the first application,
wherein the first shared information comprises content indication information and first address information, wherein
the content indication information indicates the target content, the first address information is used to determine an address for obtaining the target content,
wherein before the receiving (S1601), by the second electronic device, first shared information and target display information from a first electronic device, the method further comprises:
sending, by the second electronic device, first indication information to the first electronic device, wherein the first indication information indicates a plurality of displays of the second electronic device, and the at least one display is comprised in the plurality of displays.

6. The method according to claim 5, wherein the first indication information further indicates statuses of the plurality of displays, and the status comprises an unlocked state indicating that a display is available, or a locked state indicating that a display is unavailable,; and
all of the plurality of displays are in the unlocked state.

7. The method according to claim 5 or 6, wherein after the separately displaying, by the second electronic device, the target content on the at least one display by invoking the first application, the method further comprises:
updating, by the second electronic device in response to a received fifth operation for controlling updating of the target content, the target content displayed on a target display, wherein the target display is any display in the at least one display.

8. An electronic device (100), wherein the electronic device (100) comprises a display (194), a memory (121), and one or more processors (110), wherein
the memory (121) is configured to store computer program code, the computer program code comprises computer instructions, and when the computer instructions are executed by the one or more processors (110), the electronic device (100) is enabled to perform the method according to any one of claims 1 to 4, or perform the method according to any one of claims 5 to 7.

9. A computer-readable storage medium, wherein the computer-readable storage medium stores a computer program, and when the computer program is run on a computer, the computer is enabled to perform the method according to any one of claims 1 to 4, or perform the method according to any one of claims 5 to 7.

## Patentansprüche

1. Verfahren zur gemeinsamen Nutzung von Inhalten, das auf eine elektronische Vorrichtung angewendet wird, wobei die elektronische Vorrichtung eine erste Anwendung umfasst, und das Verfahren Folgendes umfasst:
Erlangen (S1501) erster gemeinsam genutzter Informationen durch die erste elektronische Vorrichtung als Reaktion auf eine erste empfangene Operation, wobei die erste Operation anweist, Zielinhalte in der ersten Anwendung mit mindestens einer Anzeige einer zweiten elektronischen Vorrichtung gemeinsam zu nutzen, und die ersten gemeinsam genutzten Informationen die erste Anwendung und die Zielinhalte angeben; und
Senden (S1502) der ersten gemeinsam genutzten Informationen und der Zielanzeigeinformationen durch die erste elektronische Vorrichtung an die zweite elektronische Vorrichtung, wobei die Zielanzeigeinformationen die mindestens eine Anzeige angeben,
wobei das Erlangen (S1501) erster gemeinsam genutzter Informationen durch die erste elektronische Vorrichtung Folgendes umfasst: Erlangen (S701) zweiter gemeinsam genutzter Informationen durch die erste elektronische Vorrichtung, wobei die zweiten gemeinsam genutzten Informationen einen Freigabelink angeben, der von den Zielinhalten stammt und der durch die erste Anwendung generiert wird; und
Bestimmen der ersten gemeinsam genutzten Informationen durch die erste elektronische Vorrichtung basierend auf den zweiten gemeinsam genutzten Informationen,
wobei das Bestimmen der ersten gemeinsam genutzten Informationen durch die erste elektronische Vorrichtung basierend auf den zweiten gemeinsam genutzten Informationen Folgendes umfasst:
Durchführen (S702) eines Zeichenfolgenabgleichs durch die erste elektronische Vorrichtung an den zweiten gemeinsam genutzten Informationen, um Inhaltsangabeinformationen und erste Adressinformation der Zielinhalte zu erlangen, wobei die Inhaltsangabeinformationen die Zielinhalte angeben, und die ersten Adressinformationen verwendet werden, um eine Adresse zum Erlangen der Zielinhalte zu bestimmen; und
Bestimmen der ersten gemeinsam genutzten Informationen durch die erste elektronische Vorrichtung basierend auf den Inhaltsangabeinformationen und den ersten Adressinformationen,
wobei das Verfahren vor dem Erlangen (S1501) erster gemeinsam genutzter Informationen durch die erste elektronische Vorrichtung als Reaktion auf eine erste empfangene Operation ferner Folgendes umfasst:
Empfangen der ersten Operation durch die erste elektronische Vorrichtung nach dem Empfangen erster Angabeinformationen aus der zweiten elektronischen Vorrichtung, wobei die ersten Angabeinformationen eine Vielzahl von Anzeigen der zweiten elektronischen Vorrichtung angeben,
wobei die erste Operation eine zweite Operation und eine dritte Operation umfasst, die zweite Operation anweist, die Zielinhalte gemeinsam zu nutzen, und die dritte Operation verwendet wird, um die mindestens eine Anzeige aus der Vielzahl der Anzeigen auszuwählen; und
das Empfangen der ersten Operation durch die erste elektronische Vorrichtung Folgendes umfasst:
Empfangen der zweiten Operation durch die erste elektronische Vorrichtung;
Anzeigen zweiter Angabeinformationen durch die erste elektronische Vorrichtung als Reaktion auf die zweite Operation, wobei die zweiten Angabeinformationen die Vielzahl von Anzeigen angeben; und
Empfangen der dritten Operation durch die erste elektronische Vorrichtung.

2. Verfahren nach Anspruch 1, wobei die ersten Adressinformationen ein Uniform Resource Locator sind; und das Bestimmen der ersten gemeinsam genutzten Informationen durch die erste elektronische Vorrichtung basierend auf den Inhaltsangabeinformationen und den ersten Adressinformationen Folgendes umfasst:
Verwenden der Inhaltsangabeinformationen und der ersten Adressinformationen durch die erste elektronische Vorrichtung als erste gemeinsam genutzte Informationen; oder
Umleiten (S704) der ersten Adressinformationen durch die erste elektronische Vorrichtung, um zweite Adressinformationen zu erlangen, wobei die zweiten Adressinformationen die Adresse zum Erlangen der Zielinhalte angeben; und
Verwenden der Inhaltsangabeinformationen und der ersten Adressinformationen durch die erste elektronische Vorrichtung als die ersten gemeinsam genutzten Informationen.

3. Verfahren nach Anspruch 1 oder 2, wobei die ersten Angabeinformationen ferner Statusarten der Vielzahl von Anzeigen angeben, und die Statusart einen nicht gesperrten Zustand, der angibt, dass eine Anzeige verfügbar ist, oder einen gesperrten Zustand umfasst, der angibt, dass eine Anzeige nicht verfügbar ist; und
das Verfahren vor dem Anzeigen zweiter Angabeinformationen durch die erste elektronische Vorrichtung als Reaktion auf die zweite Operation ferner Folgendes umfasst:
Bestimmen durch die erste elektronische Vorrichtung basierend auf den ersten Angabeinformationen, dass sich alle der Vielzahl von Anzeigen in dem entsperrten Zustand befinden.

4. Verfahren nach einem der Ansprüche 1 bis 3, wobei das Verfahren vor dem Erlangen erster gemeinsam genutzter Informationen durch die erste elektronische Vorrichtung als Reaktion auf eine erste empfangene Operation ferner Folgendes umfasst:
Anzeigen der Zielinhalte durch die erste elektronische Vorrichtung durch Aufrufen der ersten Anwendung; und
das Verfahren nach dem Senden der ersten gemeinsam genutzten Informationen und der Zielanzeigeinformationen durch die erste elektronische Vorrichtung an die zweite elektronische Vorrichtung ferner Folgendes umfasst:
Aktualisieren der Zielinhalte durch die erste elektronische Vorrichtung als Reaktion auf eine vierte empfangene Operation zum Steuern des Aktualisierens der Zielinhalte.

5. Verfahren zur gemeinsamen Nutzung von Inhalten, das auf eine zweite elektronische Vorrichtung angewendet wird, wobei die zweite elektronische Vorrichtung eine erste Anwendung umfasst, und das Verfahren Folgendes umfasst:
Empfangen (S1601) erster gemeinsam genutzter Informationen und Zielanzeigeinformationen durch die zweite elektronische Vorrichtung aus der ersten elektronischen Vorrichtung, wobei die ersten gemeinsam genutzten Informationen die erste Anwendung und Zielinhalte in der ersten Anwendung angeben, und die Zielanzeigeinformationen mindestens eine Anzeige der zweiten elektronischen Vorrichtung angeben;
Bestimmen (S1602) der ersten Anwendung durch die zweite elektronische Vorrichtung und Erlangen der Zielinhalte basierend auf den ersten gemeinsam genutzten Informationen, und Bestimmen der mindestens einen Anzeige basierend auf den Zielanzeigeinformationen; und
separates Anzeigen (S1603) der Zielinhalte auf der mindestens einen Anzeige durch die zweite elektronische Vorrichtung durch Aufrufen der ersten Anwendung,
wobei die ersten gemeinsam genutzten Informationen Inhaltsangabeinformationen und erste Adressinformationen umfassen, wobei
die Inhaltsangabeinformationen die Zielinhalte angeben, die ersten Adressinformationen verwendet werden, um eine Adresse zum Erlangen der Zielinhalte zu bestimmen,
wobei das Verfahren vor dem Empfangen (S1601) erster gemeinsam genutzter Informationen und von Zielanzeigeinformationen aus einer ersten elektronischen Vorrichtung durch die zweite elektronische Vorrichtung Folgendes umfasst:
Senden erster Angabeinformationen durch die zweite elektronische Vorrichtung an die erste elektronische Vorrichtung, wobei die ersten Angabeinformationen eine Vielzahl von Anzeigen der zweiten elektronischen Vorrichtung angeben, und die mindestens eine Anzeige in der Vielzahl von Anzeigen enthalten ist.

6. Verfahren nach Anspruch 5, wobei die ersten Angabeinformationen ferner Statusarten der Vielzahl von Anzeigen angeben, und die Statusart einen nicht gesperrten Zustand, der angibt, dass eine Anzeige verfügbar ist, oder einen gesperrten Zustand umfasst, der angibt, dass eine Anzeige nicht verfügbar ist; und
sich alle der Vielzahl von Anzeigen in dem entriegelten Zustand befinden.

7. Verfahren nach Anspruch 5 oder 6, wobei das Verfahren nach dem separaten Anzeigen der Zielinhalte auf der mindestens einen Anzeige durch die zweite elektronische Vorrichtung durch Aufrufen der ersten Anwendung ferner Folgendes umfasst:
Aktualisieren der auf einer Zielanzeige angezeigten Zielinhalte durch die zweite elektronische Vorrichtung als Reaktion auf eine fünfte empfangene Operation zum Steuern des Aktualisierens der Zielinhalte, wobei die Zielanzeige eine beliebige Anzeige in der mindestens einen Anzeige ist.

8. Elektronische Vorrichtung (100), wobei die elektronische Vorrichtung (100) eine Anzeige (194), einen Speicher (121) und einen oder mehrere Prozessoren (110) umfasst, wobei
der Speicher (121) dazu konfiguriert ist, einen Computerprogrammcode zu speichern, der Computerprogrammcode Computeranweisungen umfasst, und, wenn die Computeranweisungen durch den einen oder die mehreren Prozessoren (110) ausgeführt werden, die elektronische Vorrichtung (100) in die Lage versetzt wird, das Verfahren nach einem der Ansprüche 1 bis 4 durchzuführen oder das Verfahren nach einem der Ansprüche 5 bis 7 durchzuführen.

9. Computerlesbares Speichermedium, wobei das computerlesbare Speichermedium ein Computerprogramm speichert, und, wenn das Computerprogramm auf einem Computer ausgeführt wird, der Computer in die Lage versetzt wird, das Verfahren nach einem der Ansprüche 1 bis 4 durchzuführen oder das Verfahren nach einem der Ansprüche 5 bis 7 durchzuführen.

## Revendications

1. Procédé de partage de contenu, appliqué à un premier dispositif électronique, dans lequel le premier dispositif électronique comprend une première application, et le procédé comprend :
l'obtention (S1501), par le premier dispositif électronique, de premières informations partagées en réponse à une première opération reçue, dans lequel la première opération indique de partager le contenu cible dans la première application avec au moins un affichage d'un second dispositif électronique, et les premières informations partagées indiquent la première application et le contenu cible ; et
l'envoi (S1502), par le premier dispositif électronique, des premières informations partagées et des informations d'affichage cible au second dispositif électronique, dans lequel les informations d'affichage cible indiquent l'au moins un affichage,
dans lequel l'obtention (S1501), par le premier dispositif électronique, de premières informations partagées comprend :
l'obtention (S701), par le premier dispositif électronique, de secondes informations partagées, dans lequel les secondes informations partagées indiquent un lien de partage qui est du contenu cible et qui est généré par la première application ; et
la détermination, par le premier dispositif électronique, des premières informations partagées sur la base des secondes informations partagées,
dans lequel la détermination, par le premier dispositif électronique, des premières informations partagées sur la base des secondes informations partagées comprend :
la réalisation (S702), par le premier dispositif électronique, d'une correspondance de chaîne de caractères sur les secondes informations partagées, pour obtenir des informations d'indication de contenu et des premières informations d'adresse du contenu cible, dans lequel les informations d'indication de contenu indiquent le contenu cible et les premières informations d'adresse sont utilisées pour déterminer une adresse permettant d'obtenir le contenu cible ; et
la détermination, par le premier dispositif électronique, des premières informations partagées sur la base des informations d'indication de contenu et des premières informations d'adresse, dans lequel, avant l'obtention (S1501), par le premier dispositif électronique, de premières informations partagées en réponse à une première opération reçue, le procédé comprend également :
la réception, par le premier dispositif électronique, de la première opération après la réception de premières informations d'indication en provenance du second dispositif électronique,
dans lequel les premières informations d'indication indiquent une pluralité d'affichages du second dispositif électronique,
dans lequel la première opération comprend une deuxième opération et une troisième opération, la deuxième opération indique de partager le contenu cible, et la troisième opération est utilisée pour sélectionner l'au moins un affichage à partir de la pluralité d'affichages ; et
la réception, par le premier dispositif électronique, de la première opération comprend :
la réception, par le premier dispositif électronique, de la deuxième opération ;
l'affichage, par le premier dispositif électronique, de secondes informations d'indication en réponse à la deuxième opération, dans lequel les secondes informations d'indication indiquent la pluralité d'affichages ; et
la réception, par le premier dispositif électronique, de la troisième opération.

2. Procédé selon la revendication 1, dans lequel les premières informations d'adresse sont un localisateur de ressources uniforme ; et la détermination, par le premier dispositif électronique, des premières informations partagées sur la base des informations d'indication de contenu et des premières informations d'adresse comprend :
l'utilisation, par le premier dispositif électronique, des informations d'indication de contenu et des premières informations d'adresse en tant que premières informations partagées ; ou
la redirection (S704), par le premier dispositif électronique, des premières informations d'adresse pour obtenir de secondes informations d'adresse, dans lequel les secondes informations d'adresse indiquent l'adresse permettant d'obtenir le contenu cible ; et
l'utilisation, par le premier dispositif électronique, des informations d'indication de contenu et des secondes informations d'adresse en tant que premières informations partagées.

3. Procédé selon la revendication 1 ou 2, dans lequel les premières informations d'indication indiquent également les états de la pluralité d'affichages, et l'état comprend un état déverrouillé indiquant qu'un affichage est disponible, ou un état verrouillé indiquant qu'un affichage est indisponible ; et avant l'affichage, par le premier dispositif électronique, de secondes informations d'indication en réponse à la deuxième opération, le procédé comprend également :
la détermination, par le premier dispositif électronique sur la base des premières informations d'indication, que tous les affichages parmi la pluralité d'affichages sont à l'état déverrouillé.

4. Procédé selon l'une quelconque des revendications 1 à 3, dans lequel avant l'obtention, par le premier dispositif électronique, de premières informations partagées en réponse à une première opération reçue, le procédé comprend également :
l'affichage, par le premier dispositif électronique, du contenu cible en invoquant la première application ; et
après l'envoi, par le premier dispositif électronique, des premières informations partagées et des informations d'affichage cible au second dispositif électronique, le procédé comprend également :
la mise à jour, par le premier dispositif électronique, du contenu cible en réponse à une quatrième opération reçue permettant de commander la mise à jour du contenu cible.

5. Procédé de partage de contenu, appliqué à un second dispositif électronique, dans lequel le second dispositif électronique comprend une première application, et le procédé comprend :
la réception (S1601), par le second dispositif électronique, de premières informations partagées et d'informations d'affichage cible en provenance d'un premier dispositif électronique, dans lequel les premières informations partagées indiquent la première application et le contenu cible dans la première application, et les informations d'affichage cible indiquent au moins un affichage du second dispositif électronique ;
la détermination (S1602), par le second dispositif électronique, de la première application et l'obtention du contenu cible sur la base des premières informations partagées, et la détermination de l'au moins un affichage sur la base des informations d'affichage cible ; et
l'affichage (S1603) séparé, par le second dispositif électronique, du contenu cible sur l'au moins un affichage en invoquant la première application,
dans lequel les premières informations partagées comprennent des informations d'indication de contenu et des premières informations d'adresse, dans lequel
les informations d'indication de contenu indiquent le contenu cible ; les premières informations d'adresse sont utilisées pour déterminer une adresse permettant d'obtenir le contenu cible,
dans lequel avant la réception (S1601), par le second dispositif électronique, de premières informations partagées et d'informations d'affichage cible en provenance d'un premier dispositif électronique, le procédé comprend également :
l'envoi, par le second dispositif électronique, de premières informations d'indication au premier dispositif électronique,
dans lequel les premières informations d'indication indiquent une pluralité d'affichages du second dispositif électronique, et l'au moins un affichage est compris dans la pluralité d'affichages.

6. Procédé selon la revendication 5, dans lequel les premières informations d'indication indiquent également les états de la pluralité d'affichages, et l'état comprend un état déverrouillé indiquant qu'un affichage est disponible, ou un état verrouillé indiquant qu'un affichage est indisponible ; et
tous les affichages parmi la pluralité d'affichages sont à l'état déverrouillé.

7. Procédé selon la revendication 5 ou 6, dans lequel après l'affichage séparé, par le second dispositif électronique, du contenu cible sur l'au moins un affichage en invoquant la première application, le procédé comprend également :
la mise à jour, par le second dispositif électronique en réponse à une cinquième opération reçue permettant de commander la mise à jour du contenu cible, du contenu cible affiché sur un affichage cible, dans lequel l'affichage cible est un affichage quelconque parmi l'au moins un affichage.

8. Dispositif électronique (100), dans lequel le dispositif électronique (100) comprend un affichage (194), une mémoire (121) et un ou plusieurs processeurs (110), dans lequel
la mémoire (121) est configurée pour stocker un code de programme informatique, le code de programme informatique comprend des instructions informatiques ; et lorsque les instructions informatiques sont exécutées par les un ou plusieurs processeurs (110), le dispositif électronique (100) est activé pour réaliser le procédé selon l'une quelconque des revendications 1 à 4, ou réaliser le procédé selon l'une quelconque des revendications 5 à 7.

9. Support de stockage lisible par ordinateur, dans lequel le support de stockage lisible par ordinateur stocke un programme informatique, et lorsque le programme informatique fonctionne sur un ordinateur, l'ordinateur est activé pour réaliser le procédé selon l'une quelconque des revendications 1 à 4, ou réaliser le procédé selon l'une quelconque des revendications 5 à 7.
